# EUROPEAN PATENT APPLICATION

(11) **EP 4 353 483 A1**
(43) Date of publication of application: **17.04.2024**
(21) Application number: 22819931.1
(22) Date of filing: 31.03.2022
(51) Int. Cl.: B41J 2/01, C09D 11/30, B41M 5/00

(54) **INK COMPOSITION, INK SET, RECORDED MATTER, RECORDING METHOD, AND METHOD FOR PRODUCING RECORDED MATTER**

(30) Priority: 09.06.2021 JP 2021096466
(71) Applicant: DNP Fine Chemicals Co., Ltd., Yokohama-shi, Kanagawa 226-0022 (JP)
(72) Inventor: YOSHIMORI, Keishiro, Yokohama-shi, Kanagawa 226-0022 (JP); ORIKASA, Yuka, Yokohama-shi, Kanagawa 226-0022 (JP); MATSUMOTO, Kisei, Yokohama-shi, Kanagawa 226-0022 (JP); UTAKA, Koujun, Yokohama-shi, Kanagawa 226-0022 (JP); TAMURA, Mitsuyoshi, Yokohama-shi, Kanagawa 226-0022 (JP)
(74) Representative: Hasegawa, Kan
(86) International application number: PCT/JP2022/016608
(87) International publication number: WO 2022/259743

(57) **Abstract**

Provided is an ink composition with which it is possible to obtain recorded matter having excellent glossiness and to effectively suppress bleeding of printing even when using any base material (recording medium) including low-absorbent base materials such as vinyl chloride resins. This ink composition contains an organic solvent, wherein the organic solvent contains the following organic solvent A, and further contains a polysiloxane surfactant in the range of 0.01-2.0% by mass (inclusive) based on the total amount of the ink composition. Organic solvent A: at least one substance selected from the group consisting of alkylamide-based solvents (a1) and cyclic amide-based solvents (a2).

## Description

### TECHNICAL FIELD

The present invention relates to an ink composition, an ink set, a recorded matter, a recording method, and a method for producing a recorded matter.

### BACKGROUND ART

As an ink composition, an aqueous ink composition in which a colorant is dissolved or dispersed in water or a mixed liquid of water and an organic solvent, or a nonaqueous ink composition in which a colorant is dissolved or dispersed in an organic solvent not containing water is widely used. This ink composition is applied and adhered directly or via another layer to a base material such as paper by an inkjet method or the like, and the nonaqueous ink composition is dried, thereby obtaining a type or an image.

For example, Patent Document 1 describes a technique relating to a nonaqueous ink composition containing a cyclic ester (lactone-based solvent) and an organic solvent having a predetermined flash point. Patent Document 1 describes that, since the nonaqueous ink composition contains the cyclic ester (lactone-based solvent) as a solvent, a part of a recording surface is dissolved to allow an ink composition to permeate into a recording medium, thereby improving a rubbing resistance of an image.

In addition, when the ink composition is ejected onto a surface of the base material by the inkjet method, there is a problem in that an additive contained in the ink composition inhibits an opening and closing operation of a pressure regulating valve. Therefore, Patent Document 2 describes an ink composition for use in a recording device having a pressure regulating valve covered with an elastic member that adjusts a pressure in a recording head by an opening and closing operation, the ink composition including a slip agent and a lactone-based solvent. Patent Document 2 describes that the ink composition can prevent an elastic member such as a pressure regulating valve from deteriorating and can record an image having excellent rubbing resistance.

### Citation List

### Patent Document

Patent Document 1: Japanese Patent No. 6256039
Patent Document 2: Japanese Unexamined Patent Application, Publication No. 2013-249463

### DISCLOSURE OF THE INVENTION

### Problems to be Solved by the Invention

The lactone-based solvent reduces an influence of an additive on a pressure regulating valve or the like contained in the ink composition, and easily penetrates a resin base material and has high permeability.

However, the present inventors have found that when the ink composition penetrates into the resin base material and a penetration amount thereof increases, glossiness of the recording surface of the obtained recorded matter decreases.

In addition, the lactone-based solvent is difficult to dry. Furthermore, when a drying property of the ink composition is reduced, depending on a type of the base material (recording medium), bleeding may occur in the undried ink composition landed on the base material (recording medium).

An object of the present invention is to provide an ink composition with which it is possible to obtain recorded matter having excellent glossiness and to effectively prevent bleeding in printing even when using any base material (recording medium) including low-absorbent base materials such as vinyl chloride resins.

### Means for Solving the Problems

As a result of intensive studies to solve the above problems, the present inventors have found that the above problems can be solved by an ink composition containing a predetermined amount of polysiloxane-based surfactant together with a predetermined organic solvent, and have completed the present invention. Specifically, the present invention provides the following.

(1) An ink composition containing an organic solvent, the organic solvent containing: the following organic solvent A; wherein the ink composition further comprises a polysiloxane-based surfactant in a range of 0.01% by mass or more and 2.0% by mass or less relative to the total amount of the ink composition. Organic solvent A: at least one selected from the group consisting of an alkylamide-based solvent (a1) and a cyclic amide-based solvent (a2).
(2) The ink composition as described in aspect (1), in which the organic solvent A contains the alkylamide-based solvent (a1) .
(3) The ink composition as described in aspect (2), in which the alkylamide-based solvent (a1) is represented by the following formula (1). 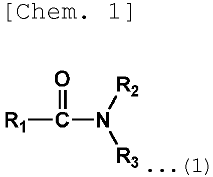 wherein R₁ represents hydrogen or an alkyl group having 1 or more and 4 or less carbon atoms, and R₂ and R₃ each independently represent hydrogen or an alkyl group having 1 or more and 4 or less carbon atoms.
(4) The ink composition as described in aspect (3), in which the alkylamide-based solvent (a1) contains at least one selected from the group consisting of N,N-diethylformamide, N,N-diethylpropanamide, and N,N-diethylacetamide.
(5) The ink composition as described in aspect (1), in which the organic solvent A contains the cyclic amide-based solvent (a2) .
(6) The ink composition as described in aspect (5), in which the cyclic amide-based solvent (a2) is represented by the following formula (2). 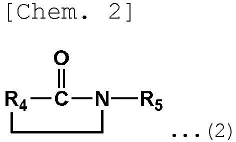 wherein R₄ represents an alkylene group having 3 or more and 5 or less carbon atoms, and R₅ represents hydrogen or an alkyl group or an unsaturated hydrocarbon group having 1 or more and 4 or less carbon atoms.
(7) The ink composition as described in aspect (6), in which the cyclic amide-based solvent (a2) contains at least one selected from the group consisting of ε-caprolactam, N-methyl-ε-caprolactam, and N-vinylcaprolactam.
(8) The ink composition as described in any one of aspects (1) to (7), in which a content of the organic solvent A is in a range of 1% by mass or more and 90% by mass or less in the total amount of the ink composition.
(9) The ink composition as described in any one of aspects (1) to (8), in which the polysiloxane-based surfactant contains polyester- and/or polyether-modified polydialkylsiloxane having a repeating unit represented by the following formula (3) and a repeating unit represented by the following formula (3) and formula (4). 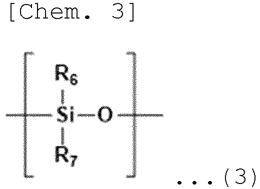 wherein R₆ represents an alkyl group having 1 to 3 carbon atoms, and R₇ represents an alkyl group having 1 to 15 carbon atoms, 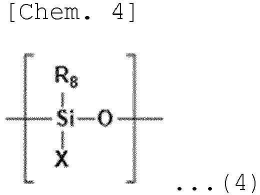 wherein R₈ represents an alkyl group having 1 to 3 carbon atoms, and X represents a polyester-modified group or a polyether-modified group.
(10) The ink composition as described in any one of aspects (1) to (9), in which the ink composition is ejected by an inkjet method.
(11) The ink composition as described in any one of aspects (1) to (10), in which the ink composition is used for a resin base material.
(12) An ink set including: the ink composition as described in any one of aspects (1) to (11).
(13) A recording method including: ejecting the ink composition as described in any one of aspects (1) to (11) onto a surface of a base material by an inkjet method.
(14) A method for producing a recorded matter including: ejecting the ink composition as described in any one of aspects (1) to (11) onto a surface of a base material by an inkjet method.
(15) A recorded matter including a recording layer made of the ink composition as described in any one of aspects (1) to (11) formed on a surface of a base material.

### Effects of the Invention

The ink composition of the present invention can obtain a recorded matter having excellent glossiness, and can effectively prevent bleeding in printing on the obtained recorded matter.

### PREFERRED MODE FOR CARRYING OUT THE INVENTION

Hereinafter, specific embodiments of the present invention will be described in detail, but the present invention is not limited to the following embodiments at all, and can be implemented with appropriate modifications within the scope of the purpose of the present invention. Further, in the present specification, the expression "-" means "...or more" and "...or less".

### <<1. Summary of Present Invention>>

An ink composition of the present invention is an ink composition containing an organic solvent, and the organic solvent contains the following organic solvent A.

Organic solvent A: at least one selected from the group consisting of an alkylamide-based solvent (a1) and a cyclic amide-based solvent (a2).

The ink composition of the present invention contains, together with the organic solvent A, a polysiloxane-based surfactant in a range of 0.01% by mass or more and 2.0% by mass or less in a total amount of the ink composition.

Since the ink composition contains a predetermined amount of a polysiloxane-based surfactant together with the organic solvent A, a recorded matter having excellent glossiness can be obtained, and bleeding in printing on the obtained recorded matter can be effectively prevented.

The ink composition of the present invention may be a colored ink composition containing a colorant (including a colored colorant and a black white colorant), may be an ink composition containing a brilliant pigment (scaly metal particles) for making the recorded matter (object) metallic, or may be a clear ink composition containing no colorant. In a case of the clear ink containing no colorant, an ink for forming a layer having a desired function may be used. Examples of such an ink include an overcoat ink composition for forming an overcoat layer that protects a recorded matter (object), a matting ink composition for matting a recorded matter (object), and an ink containing an ultraviolet absorber, a light stabilizer, or the like for forming a weather resistant layer.

### <<2-1. Nonaqueous Ink Composition>>

Hereinafter, as a specific embodiment of the present invention (hereinafter, referred to as "the present embodiment"), a nonaqueous ink composition will be described as an example of the present invention.

Here, the "nonaqueous ink composition" means an ink composition (oil-based ink composition) that does not intentionally contain water except for moisture in the atmosphere, and water inevitably contained in an additive, and is different from an aqueous ink composition in which a colorant is dissolved or dispersed in water or a mixed liquid of water and an organic solvent.

A moisture content in the nonaqueous ink composition according to the present embodiment is preferably 1.0% by mass or less, and more preferably 0.5% by mass or less in a total amount of the nonaqueous ink composition. When moisture derived from a raw material or moisture in the atmosphere during a producing process is mixed, storage stability of the nonaqueous ink composition may deteriorate, and a solid matter may be generated due to components contained in the nonaqueous ink composition. By reducing the moisture content in the nonaqueous ink composition to avoid containing moisture as much as possible (intentionally not containing moisture), it is possible to more effectively improve the storage stability.

Hereinafter, each component contained in the nonaqueous ink composition according to the present embodiment will be described.

### [Organic Solvent]

An organic solvent can disperse or dissolve each component contained in the nonaqueous ink composition according to the present embodiment. The organic solvent contains the organic solvent A (at least one selected from the group consisting of the alkylamide-based solvent (a1) and the cyclic amide-based solvent (a2)).

### (1) Alkylamide-based Solvent (a1)

The alkylamide-based solvent (a1) is an organic solvent containing a compound composed of hydrogen or an alkyl group and a -C(=O)-N- group, which is a compound having an alkyl group (CₙH₂ₙ₊₁-) and a -C(=O)-N- group (amide bond) .

The alkylamide-based solvent (a1) is a solvent that permeates into a base material to a certain extent, similar to that of a lactone-based solvent. Further, the alkylamide-based solvent (a1) has higher volatility than the lactone-based solvent, and as a result, a penetration amount into the base material can be lower than that of the nonaqueous ink composition containing the lactone-based solvent. Therefore, it is possible to improve glossiness of a recording surface of the obtained recorded matter while enjoying benefit of the nonaqueous ink composition containing the lactone-based solvent.

In addition, since the alkylamide-based solvent (a1) is easily dried, a drying property of the nonaqueous ink composition landed on the base material (recording medium) can be enhanced, and bleeding in printing is reduced.

The alkylamide-based solvent (a1) is preferably, for example, an organic solvent composed only of hydrogen or an alkyl group and a -C(=O)-N- group without an alkoxy group, and for example, an alkylamide-based solvent having the following structure can be preferably used. 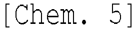 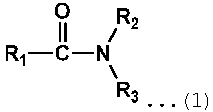 wherein R₁ represents hydrogen or an alkyl group having 1 or more and 4 or less carbon atoms, and R₂ and R₃ each independently represent hydrogen or an alkyl group having 1 or more and 4 or less carbon atoms.

Each of R₂ and R₃ in the formula (1) is preferably an alkyl group having 1 or more and 4 or less carbon atoms, and more preferably an alkyl group having 2 or more and 4 or less carbon atoms.

Specifically, examples of the alkylamide-based solvent (a1) include N,N-diethylformamide, N,N-diethylacetamide, N,N-dipropylformamide, N,N-dibutylformamide, N,N-diethylpropanamide, N,N-dipropylpropanamide, N-ethylformamide, and N-ethylacetamide. Among them, from a viewpoint of particularly exhibiting effects of the present invention, it is preferable to contain at least one selected from the group consisting of N,N-diethylformamide, N,N-diethylpropanamide, and N,N-diethylacetamide.

A content of the alkylamide-based solvent (a1) is not particularly limited, and a lower limit of the content of the alkylamide-based solvent (a1) is preferably in a range of 1% by mass or more, more preferably in a range of 5% by mass or more, and even more preferably in a range of 8% by mass or more in the total amount of the nonaqueous ink composition.

An upper limit of the content of the alkylamide-based solvent (a1) is preferably 90% by mass or less, more preferably 80% by mass or less, and even more preferably 75% by mass or less in the total amount of the nonaqueous ink composition.

### (2) Cyclic Amide-based Solvent (a2)

The cyclic amide-based solvent (a2) is a solvent having a cyclic structure and having a -C(=O)-N- group in the cyclic structure.

The cyclic amide-based solvent (a2) is a solvent that penetrates into the base material to a certain extent similarly to the lactone-based solvent, but is a solvent having a smaller penetration amount than the lactone-based solvent, and as a result, the penetration amount into the base material can be lower than that of the nonaqueous ink composition containing the lactone-based solvent. Accordingly, it is possible to improve the glossiness of the recording surface of the obtained recorded matter while enjoying the benefit of the nonaqueous ink composition containing the lactone-based solvent.

For example, the cyclic amide-based solvent (a2) having the following structure can be preferably used. 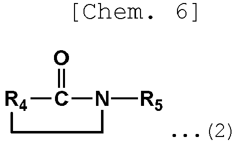 wherein R₄ represents an alkylene group having 3 or more and 5 or less carbon atoms, and R₅ represents hydrogen or an alkyl group or an unsaturated hydrocarbon group having 1 or more and 4 or less carbon atoms.

The unsaturated hydrocarbon group refers to a hydrocarbon group containing at least one or more multiple bonds, such as a vinyl group.

R₅ is preferably hydrogen or an alkyl group or an unsaturated hydrocarbon group having 1 or more and 3 or less carbon atoms, and is preferably hydrogen or an alkyl group or an unsaturated hydrocarbon group having 1 or more and 2 or less carbon atoms.

Specific examples of the cyclic amide-based solvent (a2) include N-methyl caprolactam, N-acetyl caprolactam, ε-caprolactam, N-vinylcaprolactam, 2-pyrrolidone, N-methyl-2-pyrrolidone, N-ethyl-2-pyrrolidone, N-propyl-2-pyrrolidone, N-ethyl-ε-caprolactam, N-propyl-ε-caprolactam, N-methyl-ε-caprolactam. Among them, it is preferable to contain at least one selected from the group consisting of ε-caprolactam, N-methyl caprolactam, and N-vinylcaprolactam.

A content of the cyclic amide-based solvent (a2) is not particularly limited, and a lower limit of the content of the cyclic amide-based solvent (a2) is preferably in a range of 1% by mass or more, more preferably in a range of 3% by mass or more, and even more preferably in a range of 10% by mass or more in the total amount of the nonaqueous ink composition.

An upper limit of the content of the cyclic amide-based solvent (a2) is preferably 90% by mass or less, more preferably 60% by mass or less, and even more preferably 40% by mass or less in the total amount of the nonaqueous ink composition.

Among the organic solvents A, "those organic solvents containing the alkylamide-based solvent (a1)" are more preferable. Since the alkylamide-based solvent (a1) is easily dried, in a case of a "substance containing the alkylamide-based solvent (a1)", a recorded matter having excellent glossiness can be obtained, and the drying property of the nonaqueous ink composition landed on the base material (recording medium) can be enhanced, and bleeding in printing on the obtained recorded matter can be effectively prevented.

The organic solvent A sufficiently exhibits the effects of the present invention by containing at least one of the alkylamide-based solvent (a1) or the cyclic amide-based solvent (a2), but two or more kinds of the solvents of the organic solvent A may be mixed. By mixing two or more kinds of the solvents, balance between the glossiness of the obtained recorded matter and the effect of preventing bleeding in printing can be freely set. When two or more kinds of the solvents among the organic solvent A are mixed, a lower limit of a total content of the organic solvent A is preferably in a range of 1% by mass or more, more preferably in a range of 5% by mass or more, and even more preferably in a range of 10% by mass or more in the total amount of the nonaqueous ink composition. An upper limit of the total content of the organic solvent A is preferably 90% by mass or less in the total amount of the nonaqueous ink composition.

### [Other Organic Solvents]

The organic solvent may contain other organic solvents other than the organic solvent A described above. Specifically, examples thereof include generally used organic solvents such as alkylene glycol monoalkyl ether such as ethylene glycol mono-n-butyl ether, ethylene glycol mono-isobutyl ether, ethylene glycol mono-t-butyl ether, ethylene glycol mono-2-ethylhexyl ether, diethylene glycol monomethyl (or ethyl, propyl, isopropyl, n-butyl, isobutyl, t-butyl, 2-ethylhexyl) ether, triethylene glycol monomethyl (or ethyl, propyl, isopropyl, n-butyl, isobutyl, t-butyl, 2-ethylhexyl) ether, tetraethylene glycol monomethyl ether, propylene glycol mono-n-butyl ether, propylene glycol mono-isobutyl ether, propylene glycol mono-t-butyl ether, propylene glycol mono-2-ethylhexyl ether, dipropylene glycol monomethyl (or ethyl, propyl, isopropyl, n-butyl, isobutyl, t-butyl, 2-ethylhexyl) ether, tripropylene glycol monomethyl (or ethyl, propyl, isopropyl, n-butyl, isobutyl, t-butyl) ether, and tetrapropylene glycol monomethyl ether (or ethyl, propyl, isopropyl, n-butyl, isobutyl, t-butyl, 2-ethylhexyl); dialkyl ether of polyhydric alcohol such as ethylene glycol dibutyl ether, ethylene glycol dipropyl ether, diethylene glycol dimethyl ether, diethylene glycol diethyl ether, diethylene glycol methyl ethyl ether, diethylene glycol dipropyl ether, diethylene glycol propyl methyl ether, diethylene glycol dibutyl ether, diethylene glycol butyl methyl ether, diethylene glycol butyl ethyl ether, diethylene glycol methyl-2-ethylhexyl ether, triethylene glycol dimethyl ether, triethylene glycol diethyl ether, triethylene glycol ethyl methyl ether, tetraethylene glycol dimethyl ether, tetraethylene glycol diethyl ether, tetraethylene glycol ethyl methyl ether, propylene glycol diethyl ether, propylene glycol ethyl methyl ether, propylene glycol methyl propyl ether, propylene glycol methyl butyl ether, propylene glycol methyl 2-ethylhexyl ether, dipropylene glycol dimethyl ether, dipropylene glycol diethyl ether, dipropylene glycol ethyl methyl ether, dipropylene glycol methyl propyl ether, dipropylene glycol dipropyl ether, dipropylene glycol methyl butyl ether, tripropylene glycol dimethyl ether, tripropylene glycol diethyl ether, and tripropylene glycol ethyl methyl ether; lactone such as γ-butyrolactone, δ-valerolactone, δ-hexanolactone, ε-caprolactone, γ-valerolactone, γ-hexalactone, γ-heptalactone, γ-octalactone, γ-nonalactone, γ-decalactone, γ- undecalactone, δ-heptalactone, δ-octalactone, δ-nonalactone, δ-decalactone, and δ-undecalacton; carbonate such as propylene carbonate and ethylene carbonate; oxazolidinone-based solvents such as 3-methyl-2-oxazolidinone, 3-ethyl-2-oxazolidinone, and N-vinylmethyl oxazolidinone; acetate solvents such as triethylene glycol butyl ether acetate, ethylene glycol butyl ether acetate, diethylene glycol ethyl ether acetate, diethylene glycol methyl ether acetate, diethylene glycol butyl ether acetate, propylene glycol methyl ether acetate, dipropylene glycol methyl ether acetate, 1-methoxy-2-propyl acetate, 2-methylbutyl acetate, 3-methoxybutyl ether acetate, and cyclohexyl acetate; amide-based solvents such as 3-methoxypropanamide, 3-butoxypropanamide, N,N-dimethyl-3-methoxypropanamide, N,N-dimethyl-3-methoxypropanamide, N,N-dimethyl-3-butoxypropanamide, and N,N-dimethyl-3-butoxypropanamide; alkyl alcohol having 1 to 5 carbon atoms such as methyl alcohol, ethyl alcohol, n-propyl alcohol, isopropyl alcohol, n-butyl alcohol, sec-butyl alcohol, tert-butyl alcohol, isobutyl alcohol, and n-pentanol; monovalent alcohol such as 3-methoxy-3-methyl-1-butanol, 3-methoxy-1-propanol, 1-methoxy-2-propanol, and 3-methoxy-n-butanol; ketone or keto alcohol such as acetone, methyl ethyl ketone, methyl-n-propyl ketone, methyl isopropyl ketone, methyl-n-butyl ketone, methyl isobutyl ketone, methyl-n-amyl ketone, methyl hexyl ketone, methyl isoamyl ketone, diethyl ketone, ethyl-n-propyl ketone, ethyl isopropyl ketone, ethyl-n-butyl ketone, ethyl isobutyl ketone, di-n-propyl ketone, diisobutyl ketone, cyclopentanone, cyclohexanone, methyl cyclohexanone, isophorone, and acetyl ketone; ether such as tetrahydrofuran and dioxane; an oxyethylene or oxypropylene copolymer such as polyethylene glycol and polypropylene glycol; diol such as ethylene glycol, propylene glycol, diethylene glycol, dipropylene glycol, 1,3-propanediol, isobutylene glycol, triethylene glycol, tripropylene glycol, tetraethylene glycol, 1,3-propanediol, 2-methyl-1,2-propanediol, 2-methyl-1,2-propanediol, 1,2-butanediol, 1,3-butanediol, 1,4-butanediol, 1,2-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, and 2-methyl-2,4-pentanediol; triol such as glycerin, trimethylolethane, trimethylolpropane, and 1,2,6-hexanetriol; tetravalent alcohol such as mesoerythritol and pentaerythritol; alkanol amines such as monoethanolamine, diethanolamine, triethanol amine, N-methyl ethanol amine, N-ethyl ethanol amine, N-butyl ethanol amine, N-methyl diethanolamine, N-ethyl diethanolamine, and N-butyl diethanolamine; acetate ester such as methyl acetate, ethyl acetate, n-propyl acetate, isopropyl acetate, n-butyl acetate, isobutyl acetate, hexyl acetate, and octyl acetate; lactic acid ester such as methyl lactate, ethyl lactate, butyl lactate, propyl lactate, ethylhexyl lactate, amyl lactate, and isoamyl lactate; dibasic acid ester such as dimethyl oxalate, diethyl oxalate, dimethyl malonic acid, diethyl malonic acid, dipropyl malonic acid, dimethyl succinate, diethyl succinate, dimethyl glutarate, and diethyl glutarate; saturated carbohydrate such as n-hexane, isohexane, n-nonane, isonane, dodecane, and isododecane; unsaturated hydrocarbon such as 1-hexene, 1-heptene, and 1-octene; cyclic saturated hydrocarbon such as cyclohexane, cycloheptane, cyclooctane, cyclodecane, and decalin; cyclic unsaturated hydrocarbons such as cyclohexene, cycloheptene, cyclooctene, 1,1,3,5,7-cyclooctatetraene, and cyclododecene; aromatic hydrocarbon such as benzene, toluene, and xylene; morpholine such as N-methylmorpholine, N-ethylmorpholine, and N-formylmorpholine; and a terpene solvent, which do not correspond to the organic solvent A. It is preferable to select a solvent having an appropriate HLB value according to a resin, a dispersant, and the like to be combined.

### [Surfactant]

The nonaqueous ink composition according to the present embodiment contains the polysiloxane-based surfactant. The polysiloxane-based surfactant is a surfactant having a siloxane skeleton. Since the ink composition contains a predetermined amount of a polysiloxane-based surfactant together with the organic solvent A, the recorded matter having excellent glossiness can be obtained, and bleeding in printing on the obtained recorded matter can be effectively prevented.

The reason for this is not necessarily clear. Since a portion on the base material (recording medium) where an application amount of the nonaqueous ink composition is small is dried faster than a portion where the application amount of an ink composition is large, a concentration of the polysiloxane-based surfactant is locally and temporarily increased in the portion where the application amount of the nonaqueous ink composition is small. Thus, the polysiloxane-based surfactant in the portion where the application amount is small moves to a portion where an application amount of the ink composition is large. Accordingly, it is presumed that it is possible to reduce fluidity from the portion on the base material (recording medium) where the application amount of the nonaqueous ink composition is large to the portion where the application amount of the ink composition is small, and bleeding in printing on the recorded matter can be prevented.

It is also presumed that a local difference in surface tension of the nonaqueous ink composition on the base material (recording medium) may cause bleeding in printing, but by containing the polysiloxane-based surfactant, the difference in the surface tension of the nonaqueous ink composition on the base material (recording medium) can be reduced to prevent bleeding in printing on a recorded matter.

Furthermore, by containing the polysiloxane-based surfactant, it is possible to prevent a decrease in glossiness due to permeation of the nonaqueous ink composition into the base material, and to impart a slip property to the obtained recorded matter.

In addition, as described above, since the alkylamide-based solvent (a1) is easily dried, in a case of an ink composition containing the alkylamide-based solvent (a1), a drying property of the ink composition landed on the base material (recording medium) can be enhanced, and bleeding in printing can be further prevented.

The polysiloxane-based surfactant may be a modified polysiloxane-based surfactant. Examples of the modified polysiloxane-based surfactant include polyether-modified, polyester-modified, aralkyl-modified, and polyacryl-modified polysiloxane-based surfactants. Among them, polyester- and/or polyether-modified polydialkylsiloxane is preferably used.

Examples of the polyester- and/or polyether-modified polydialkylsiloxane include those containing a repeating unit represented by the following formula (3) and formula (4). 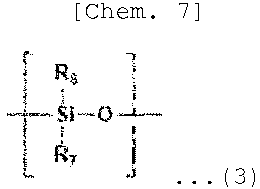 wherein R₆ represents an alkyl group having 1 to 3 carbon atoms, and R₇ represents an alkyl group having 1 to 15 carbon atoms. 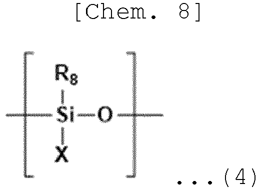 wherein R₈ represents an alkyl group having 1 to 3 carbon atoms, and X represents a polyester-modified group or a polyether-modified group.

The above polyester- and/or polyether-modified polydialkylsiloxane may be a co-modified compound further containing an organic group such as an epoxy group, an amino group, or a (meth) acryloyl group.

Specific examples of the polyester- and/or polyether-modified polydialkylsiloxane include: FZ-2122, FZ-2110, FZ-7006, FZ-2166, FZ-2164, FZ-7001, FZ-2120, SH8400, FZ-7002, FZ-2104, 8029ADDITIVE, 8032ADDITIVE, 57ADDITIVE, 67ADDITIVE, and 8616ADDITIVE (all manufactured by Dow Corning Toray Co., Ltd.); KF-6012, KF-6015, KF-6004, KF-6013, KF-6011, KF-6043, KP-104, 110, 112, 323, and 341 (all manufactured by Shin-Etsu Chemical Co., Ltd.); BYK-300/302, BYK-301, BYK-306, BYK-307, BYK-310, BYK-313, BYK-315N, BYK-320, BYK-322, BYK-323, BYK-325, BYK-326, BYK-330, BYK-331, BYK-333, BYK-337, BYK-341, BYK-342, BYK-344, BYK-345/346, BYK-347, BYK-348, BYK-349, BYK-370, BYK-375, BYK-377, BYK-378, BYK-UV3500, BYK-3451, BYK-UV3510, BYK-3530, BYK-UV3570, BYK-3455, and BYK-Silclean3700 (all manufactured by BYK-Chemie); Silface SAG503A, Silface SJM-002, and Silface SJM-003 (all manufactured by Nissin Chemical Co., Ltd.); and TEGOTwin4000, TEGOTwin4100, TEGOWet240, TEGOWet250, and TEGOWet240 (all manufactured by Evonik).

A content of the polysiloxane-based surfactant is not particularly limited as long as the content thereof is in a range of 0.01% by mass or more and 2.0% by mass or less in the total amount of the nonaqueous ink composition, and a lower limit of the content of the polysiloxane-based surfactant is preferably 0.03% by mass or more, and more preferably 0.05% by mass or more in the total amount of the nonaqueous ink composition. An upper limit of the content of the polysiloxane-based surfactant is preferably 1.5% by mass or less, and more preferably 1.0% by mass or less.

In addition, the nonaqueous ink composition according to the present embodiment may contain a surfactant different from the surfactant having the siloxane skeleton. Examples of the surfactant include, for example, nonionic P-208, P-210, P-213, E-202S, E-205S, E-215, K-204, K-220, S-207, S-215, A-10R, A-13P, NC-203, NC-207 (manufactured by NOF CORPORATION), Emulgen 106, 108, 707, 709, A-90, A-60 (manufactured by Kao Corporation), Floren G-70, D-90, TG-740W (manufactured by KYOEISHA CHEMICAL Co., LTD.), Poem J-0081HV (manufactured by Riken Vitamin Co., Ltd.), Adekatol NP-620, NP-650, NP-660, NP-675, NP-683, NP-686, Adekacol CS-141E, TS-230E (manufactured by Adeka Co., Ltd.), Sorgen 30V, 40, TW-20, TW-80, Neugen CX-100 (manufactured by DKS Co. Ltd.), and the like, which are polyoxyalkylene alkyl ethers. As a fluorine-based surfactant, it is preferable to use a fluorine-modified polymer, and specific examples thereof include BYK-340 (manufactured by BYK Japan KK), and the like. Specific examples of an acetylene glycol-based surfactant include Surfynol (registered trademark) 82, 104, 465, 485, TG (all manufactured by Air Products and Chemicals, Inc.), Olfine (registered trademark) STG, E1010 (all manufactured by Nissin Chemical Industry CO., Ltd.), and the like. The surfactant is not limited to those described above, an anionic surfactant, a cationic surfactant, an amphoteric surfactant, or a nonionic surfactant may be used.

### [Resin]

The nonaqueous ink composition according to the present embodiment may not contain a resin or may contain a resin. By containing a resin, fixability, water resistance, and stretchability of a recording layer formed by the nonaqueous ink composition can be improved. Further, glossiness of the obtained recorded matter can be improved.

The resin is not particularly limited, and examples thereof include an acrylic resin, a polystyrene resin, a polyester resin, a vinyl chloride resin, a vinyl acetate resin, a vinyl chloride-vinyl acetate copolymer resin, a polyethylene resin, a polyurethane resin, a rosin modified resin, a phenol resin, a terpene resin, a polyamide resin, a vinyl toluene-α-methylstyrene copolymer, an ethylene-vinyl acetate-based copolymer, a cellulose resin, a silicone (silicon) resin, an acrylic amide resin, an epoxy resin, and a copolymer resin and a mixture thereof. Among them, those containing an acrylic resin, a vinyl chloride-vinyl acetate copolymer resin, a cellulose resin, a polyester resin, or a polyurethane resin are preferable.

The acrylic resin is not particularly limited as long as it is contained as a main component of a monomer that constitutes a (meth) acrylic acid ester monomer. The acrylic resin may be a homopolymer of one type of radical polymerizable monomer or may be any of copolymers obtained by selecting and using two or more types of radical polymerizable monomers. In particular, a preferred acrylic resin for the nonaqueous ink composition according to the present embodiment is a homopolymer of methyl methacrylate or a copolymer of methyl methacrylate and at least one of compounds selected from the group consisting of butyl methacrylate, ethoxyethyl methacrylate, and benzyl methacrylate. Alternatively, examples of a commercially available acrylic resin include "Paraloid B99N", "Paraloid B60", "Paraloid B66", and "Paraloid B82" manufactured by Rohm and Haas company.

The vinyl chloride resin may be a homopolymer consisting of a vinyl chloride monomer or may be any of copolymers in which two or more types of polymerizable monomers are selected and used. Examples of the vinyl chloride resin copolymer include the vinyl chloride-vinyl acetate copolymer resin. The vinyl chloride-vinyl acetate copolymer resin is a polymer of a vinyl chloride monomer and a vinyl acetate monomer. Examples of the vinyl chloride-vinyl acetate copolymer resin include a vinyl chloride-vinyl acetate copolymer, a vinyl chloride/vinyl acetate/maleic acid copolymer, a vinyl chloride/vinyl acetate/vinyl alcohol copolymer, a vinyl chloride/vinyl acetate/hydroxyalkyl acrylate copolymer, and a mixture thereof. The vinyl chloride-vinyl acetate copolymer resin described above can be obtained and used in the present invention from Nissin Chemical Industry Co., Ltd. under trade names such as "Solbin C", "Solbin CL", "Solbin CNL", "Solbin CLL", "Solbin CLL2", "Solbin C5R", "Solbin TA2", "Solbin TA3", "Solbin A", "Solbin AL", "Solbin TA5R", and "Solbin M5".

The vinyl chloride-vinyl acetate copolymer resin can be obtained by polymerization of a vinyl chloride monomer and a vinyl acetate monomer. A polymerization method can be a well-known polymerizing method. The polymerization method is preferably emulsion polymerization or suspension polymerization, and more preferably suspension polymerization.

The cellulose resin is a resin having a cellulose skeleton obtained by biologically or chemically introducing a functional group using cellulose as a raw material. For example, examples of the cellulose resin include a cellulose acetate alkylate resin such as a cellulose acetate butyrate resin, a cellulose acetate propionate resin, and a cellulose acetate propionate butyrate resin, a cellulose acetate resin, a nitrocellulose resin, and a mixture thereof. The cellulose resin can be obtained and used under trade names such as "CAB 551-0.01", "CAB 551-0.2", "CAB 553-0.4", "CAB 531-1", "CAB 381-0.1", "CAB 381-0.5", "CAB 381-2", "CAB 381-20", "CAP 504", and "CAP 482-0.5" manufactured by EASTMAN company.

The polyester resin includes at least a structural unit obtained by polycondensation of an alcohol component and a carboxylic acid component. The polyester resin may include a modified polyester resin. Examples of the polyester resin include "VYLON 226", "VYLON 270", "VYLON 560", "VYLON 600", "VYLON 630", "VYLON 660", "VYLON 885", "VYLONGK 250", "VYLONGK 810", "VYLONGK 890", and the like manufactured by TOYOBO CO., LTD., and "elitleUE-3200", "elitleUE-3285", "elitleUE-3320", "elitleUE-9800", "elitleUE-9885", and the like manufactured by UNITIKA LTD.

The polyurethane resin includes at least a structural unit obtained by copolymerization of the alcohol component and an isocyanate component. The polyurethane resin may contain a polyurethane resin modified with polyester, polyether, or caprolactone. The above polyurethane resin can be obtained and used from Arakawa Chemical Industries, Ltd. under trade names such as "UREARNO KL-424", "UREARNO KL-564", "UREARNO KL-593", and "UREARNO 3262", and from DIC Corporation under trade names such as "PANDEX 372E", "PANDEX 390E", "PANDEX 394E", "PANDEX 304", "PANDEX 305E", "PANDEX P-870", "PANDEX P-910", "PANDEX P-895", "PANDEX 4030", and "PANDEX 4110".

Further, these acrylic resin, vinyl chloride-vinyl acetate copolymer resin, cellulose resin, polyester resin, and polyurethane resin may be used alone, but a mixture of two kinds of these is preferable, and a resin obtained by mixing an acrylic resin and a vinyl chloride-vinyl acetate copolymer resin is more preferable. A content ratio of the acrylic resin to the vinyl chloride-vinyl acetate copolymer resin can be controlled so as to satisfy requirements of color development, a drying property, a coated film property, printability, and the like required for a nonaqueous ink. When the acrylic resin and the vinyl chloride-vinyl acetate copolymer resin are mixed, a mixing ratio is not particularly limited and can be appropriately changed.

A weight average molecular weight (relative molecular mass) of a resin is not particularly limited, and a lower limit of the weight average molecular weight (relative molecular mass) of the resin is preferably 15000 or more, and more preferably 20000 or more. When the weight average molecular weight (relative molecular mass) of the resin is 15000 or more, coated film rubbing resistance of a recording layer (coated film) of the obtained recorded matter can be improved. An upper limit of the weight average molecular weight (relative molecular mass) is preferably 80000 or less, and more preferably 50000 or less. When the weight average molecular weight (relative molecular mass) of the resin is 80000 or less, a recorded matter having more excellent glossiness can be obtained. The relative molecular weight of the resin can be measured by normal gel permeation chromatography (GPC).

The resin contained in the nonaqueous ink composition is preferably in a range of 0.05% by mass or more, more preferably in a range of 0.1% by mass or more, and further preferably in a range of 0.5% by mass or more, in the total amount of the nonaqueous ink composition. The resin contained in the nonaqueous ink composition is preferably contained in a range of 20.0% by mass or less, more preferably contained in a range of 15.0% by mass or less, and even more preferably contained in a range of 10.0% by mass or less in the total amount of the nonaqueous ink composition.

### [Colorant]

The nonaqueous ink composition according to the present embodiment may contain a colorant. The colorant is not particularly limited, and may be a dye-based colorant or a pigment-based colorant. From a viewpoint that the recorded matter has good resistance such as water resistance and light resistance, it is preferable to use a pigment (pigment-based colorant). The pigment that can be used in the nonaqueous ink composition according to the present embodiment is not particularly limited, and examples thereof include an organic pigment or an inorganic pigment used in the ink composition in the related art. These may be used alone or may be used in combination of two or more thereof. The nonaqueous ink composition according to the present embodiment may contain no colorant.

When a pigment is used in the nonaqueous ink composition according to the present embodiment, dispersion stability of the pigment can be improved by using a dispersant or a dispersion aid (pigment derivative) to be described below.

Specific examples of the organic pigment include, for example, an insoluble azo pigment, a soluble azo pigment, a derivative from a dye, a phthalocyanine-based organic pigment, a quinacridone-based organic pigment, a perylene-based organic pigment, a perinone-based organic pigment, an azomethine-based organic pigment, an anthraquinone-based organic pigment (anthrone-based organic pigment), a xanthene-based organic pigment, a diketopyrrolopyrrole-based organic pigment, a dioxazine-based organic pigment, a nickel azo-based pigment, an isoindolinone-based organic pigment, a pyranthrone-based organic pigment, a thioindigo-based organic pigment, a condensed azo-based organic pigment, a benzimidazolone-based organic pigment, a quinophthalone organic pigment, an isoindoline organic pigment, and an organic solid solution pigment such as a quinacridone-based solid solution pigment and a perylene-based solid solution pigment. Examples of other pigments include a lake pigment and a carbon black.

Examples of the organic pigment include, by color index (C.I.) numbers, C.I. Pigment Yellow 1, 2, 3, 12, 13, 14, 16, 17, 20, 24, 73, 74, 75, 83, 93, 95, 97, 98, 109, 110, 114, 117, 120, 125, 128, 129, 130, 137, 138, 139, 147, 148, 150, 151, 153, 154, 155, 166, 168, 180, 185, 213, and 214; C.I. Pigment Red 5, 7, 9, 12, 48, 49, 52, 53, 57:1, 97, 112, 122, 123, 146, 149, 150, 168, 177, 180, 184, 192, 202, 206, 208, 209, 215, 216, 217, 220, 223, 224, 226, 227, 228, 238, 240, 254, 255, 269, and 291; C.I. Pigment Orange 16, 36, 43, 51, 55, 59, 61, 64, 71, and 73; C.I. Pigment Violet 19, 23, 29, 30, 37, 40, and 50; C.I. Pigment Blue 15, 15:1, 15:3, 15:4, 15:6, 16, 22, 60, and 64; C.I. Pigment Green 7, 36, 58, 59, 62, and 63; C.I. Pigment Brown 23, 25, and 26; and C.I. Pigment Black 7.

Specific examples of the dye that can be used in the nonaqueous ink composition according to the present embodiment include an azo-based dye, a benzoquinone-based dye, a naphthoquinone-based dye, an anthraquinone-based dye, a cyanine-based dye, a squarylium-based dye, a chroconium-based dye, a merocyanine-based dye, a stilbene-based dye, a diarylmethane-based dye, a triarylmethane-based dye, a fluoran-based dye, a spiropyran-based dye, a phthalocyanine-based dye, an indigo-based dye such as indigoide, a fulgide-based dye, a nickel complex-based dye, and an azulene-based dye.

Specific examples of the inorganic pigment that can be used in the nonaqueous ink composition according to the present embodiment include titanium oxide, barium sulfate, calcium carbonate, zinc oxide, barium carbonate, silica, talc, clay, synthetic mica, alumina, zinc oxide, lead sulfate, yellow lead, zinc yellow, red oxide (red iron oxide (III), cadmium red, ultramarine blue, Prussian blue, chromium oxide green, cobalt green, amber, titanium black, aluminum, titanium, indium, synthetic iron black, and inorganic solid solution pigment.

An average dispersion particle diameter of the pigment that can be contained in the nonaqueous ink composition according to the present embodiment is not particularly limited as long as desired color development is possible. Although a volume average particle diameter varies depending on a type of the pigment used, from a viewpoint of obtaining good dispersibility and dispersion stability and sufficient coloring power of the pigment, the volume average particle diameter is preferably in a range of 5 nm or more, more preferably 20 nm or more, and further preferably 30 nm or more. By making the volume average particle diameter to be a lower limit value or more described above, light resistance of the nonaqueous ink composition can be improved. The volume average particle diameter is preferably in a range of 300 nm or less, more preferably 200 nm or less, and further preferably 150 nm or less. By making the volume average particle diameter to be an upper limit value or less described above, inkjet ejection stability can be improved when the nonaqueous ink composition is a nonaqueous inkjet ink composition which is ejected onto a surface of the base material by an inkjet method. In the present embodiment, the volume average particle diameter of the pigment is a volume-based cumulative 50% particle diameter (D50) measured at 25°C using a particle diameter distribution measurement device (NANOTRACWAVE particle size analyzer manufactured by Microtrac BEL Co., Ltd.). In the present specification, the "volume-based cumulative 50% particle diameter (D50)" refers to a particle diameter at which a cumulative volume calculated based on a small diameter side is 50%. The "volume-based cumulative 50% particle diameter (D50)" may be referred to as a "volume average particle diameter D50" or a "median diameter".

In an ink set containing a plurality of nonaqueous ink compositions according to the present embodiment, the volume average particle diameters of the pigments contained in the respective nonaqueous ink compositions may be the same or may be different. For example, in a case of an ink set containing a cyan ink and a magenta ink of the nonaqueous ink composition according to the present embodiment, the volume average particle diameter of the pigment contained in the cyan ink and the volume average particle diameter of the pigment contained in the magenta ink may be the same or may be different.

In the nonaqueous ink composition according to the present embodiment, a content of the pigment is not particularly limited, and may be appropriately adjusted as long as a desired image can be formed. Specifically, although the content of the pigment depends on the type of the pigment, the content of the pigment is preferably in a range of 0.05% by mass or more, and more preferably in a range of 0.1% by mass or more, in the total amount of the nonaqueous ink composition. The content of the pigment is preferably in a range of 20% by mass or less, and more preferably in a range of 10% by mass or less, in the total amount of the nonaqueous ink composition. By making the content of the pigment to be in the range of 0.05% by mass or more, or in the range of 20% by mass or less, an excellent balance can be obtained between the dispersion stability and the coloring power of the pigment.

Further, in the nonaqueous ink composition according to the present embodiment, a color to be recorded (printed) is not particularly limited, and a colorant may be selected according to a purpose and used in combination. The color can be used for inks of respective colors such as yellow, magenta, cyan, and black, and inks of respective colors such as light magenta, light cyan, light black, orange, green, red, and white. In this case, in an ink set containing the nonaqueous ink composition according to the present embodiment, colorants of the same color may be selected.

### [Dispersant]

If necessary, a dispersant may be used in the nonaqueous ink composition according to the present embodiment. As the dispersant, any dispersant used in the nonaqueous ink composition can be used. As the dispersant, a polymeric dispersant may be used. Such dispersant has a main chain containing polyester, polyacrylic, polyurethane, polyamine, polycaprolactone, or the like, and a side chain containing a polar group such as an amino group, a carboxyl group, a sulfone group, or a hydroxyl group. As a polyacrylic-based dispersant, for example, Disperbyk-2000, 2001, 2008, 2009, 2010, 2020, 2020N, 2022, 2025, 2050, 2070, 2095, 2150, 2151, 2155, 2163, 2164, BYKJET-9130, 9131, 9132, 9133, 9151 (manufactured by BYK Japan KK), Efka PX4310, PX4320, PX4330, PA4401, 4402, PA4403, 4570, 7411, 7477, PX4700, PX4701 (manufactured by BASF SE), TREPLUS D-1200, D-1410, D-1420, MD-1000 (manufactured by Otsuka Chemical Co., Ltd.), and Floren DOPA-15BHFS, 17HF, 22, G-700, 900, NC-500, GW-1500 (manufactured by KYOEISHA CHEMICAL Co., LTD.) are used. As a polycaprolactone-based dispersant, for example, Ajisper PB821, PB822, and PB881 (manufactured by Ajinomoto Fine-Techno Co., Ltd.), Hinoact KF-1000, T-6000, T-7000, T-8000, T-8000E, and T-9050 (manufactured by Kawaken Fine Chemicals Co., Ltd.), Solsperse 20000, 24000, 32000, 32500, 32550, 32600, 33000, 33500, 34000, 35200, 36000, 37500, 39000, 71000, 76400, 76500, 86000, 88000, J180, and J200 (manufactured by Lubrizol Co., Ltd.), TEGO Dispers 652, 655, 685, 688, and 690 (manufactured by Evonik Japan Co., Ltd.) are used. As a preferred dispersant, BYKJET-9130, 9131, 9132, 9133, 9151, Efka PX4310, PX4320, PX4330, PX4700, PX4701, Solsperse 20000, 24000, 32000, 33000, 33500, 34000, 35200, 39000, 71000, 76500, 86000, 88000, J180, J200, TEGO Dispers 655, 685, 688, 690, and the like are used. These may be used alone or a mixture thereof may be used.

A content of the dispersant is not particularly limited, and a lower limit of the content of the dispersant is preferably in a range of 0.1% by mass or more, more preferably in a range of 0.5% by mass or more, and further preferably in a range of 0.8% by mass or more, in the total amount of the nonaqueous ink composition. The content of the dispersant is not particularly limited, and the lower limit of the content of the dispersant is preferably in a range of 5.0% by mass or more, more preferably in a range of 4.0% by mass or more, and further preferably in a range of 3.0% by mass or more, in the total amount of the nonaqueous ink composition.

### [Dispersion Aid]

A dispersion aid may be used in the nonaqueous ink composition according to the present embodiment, if necessary. The dispersion aid adheres to a surface of a colorant (pigment), and a functional group of the dispersion aid increase affinity with the organic solvent and a dispersant in the nonaqueous ink composition, thereby improving the dispersion stability. As the dispersion aid, a known pigment derivative having a functional group such as an acidic group, a basic group, or a neutral group in an organic pigment residue can be used.

### [Other Components]

The nonaqueous ink composition according to the present embodiment may contain, as an optional component, a known additive such as a stabilizer such as an antioxidant or an ultraviolet absorber, an epoxidized product, a polycarboxylic acid, a surface conditioner, a slip agent, a leveling agent (acrylic leveling agent, silicon-based leveling agent, or the like), an antifoaming agent, a pH adjuster, a disinfectant, a preservative, a deodorant, a charge adjuster, or a wetting agent. Specific examples of the antioxidant include a hindered phenol-based antioxidant, an amine-based antioxidant, a phosphorus-based antioxidant, a sulfur-based antioxidant, and a hydrazine-based antioxidant. Specific examples thereof include BHA (2,3-butyl-4-oxyanisole) and BHT (2,6-di-t-butyl-p-cresol). In addition, a benzophenone compound or a benzotriazole compound can be used as the ultraviolet absorber. In addition, specific examples of the epoxidized product include epoxy glyceride, epoxy fatty acid monoester, and epoxyhexahydrophthalate, and specific examples thereof include ADK CIZER O-130P and ADK CIZER O-180A (manufactured by ADEKA Corporation). Specific examples of the polycarboxylic acid include citric acid and maleic acid.

### <<2-2. Aqueous Ink Composition>>

As another embodiment of the present invention (hereinafter, referred to as "the present embodiment"), an aqueous ink composition will be described as an example of the present invention. The aqueous ink composition contains water and an organic solvent, and the organic solvent contains the organic solvent A, and a polysiloxane-based surfactant in a range of 0.01% by mass or more and 2.0% by mass or less in the total amount of the nonaqueous ink composition.

### [Organic Solvent]

The organic solvent contains the organic solvent A. As the organic solvent A (at least one selected from the group consisting of the alkylamide-based solvent (a1) and the cyclic amide-based solvent (a2)), those contained in the nonaqueous ink composition can be used.

The content of the alkylamide-based solvent (a1) is not particularly limited, and the lower limit of the content of the alkylamide-based solvent (a1) is preferably in a range of 0.1% by mass or more, more preferably in a range of 1.0% by mass or more, and even more preferably in a range of 3.0% by mass or more in the total amount of the nonaqueous ink composition.

The upper limit of the content of the alkylamide-based solvent (a1) is preferably 40.0% by mass or less, more preferably 35.0% by mass or less, and even more preferably 30.0% by mass or less in the total amount of the nonaqueous ink composition.

The content of the cyclic amide-based solvent (a2) is not particularly limited, and the lower limit of the content of the cyclic amide-based solvent (a2) is preferably in a range of 0.1% by mass or more, more preferably in a range of 1.0% by mass or more, and even more preferably in a range of 3.0% by mass or more in the total amount of the nonaqueous ink composition.

The upper limit of the content of the cyclic amide-based solvent (a2) is preferably 40.0% by mass or less, more preferably 35.0% by mass or less, and even more preferably 30.0% by mass or less in the total amount of the nonaqueous ink composition.

The organic solvent A sufficiently exhibits the effects of the present invention by containing at least one of the alkylamide-based solvent (a1) or the cyclic amide-based solvent (a2), but two or more kinds of the solvents of the organic solvent A may be mixed. By mixing two or more kinds of the solvents, balance between the glossiness of the obtained recorded matter and the effect of preventing bleeding in printing can be freely set. When two or more kinds of the solvents among the organic solvent A are mixed, a lower limit of a total content of the organic solvent A is preferably in a range of 1.0% by mass or more, more preferably in a range of 3.0% by mass or more, and even more preferably in a range of 5.0% by mass or more in the total amount of the nonaqueous ink composition. The upper limit of the total content of the organic solvent A is preferably 30.0% by mass or less in the total amount of the nonaqueous ink composition.

The organic solvent may contain other organic solvents. As the other organic solvents, a water-soluble organic solvent can be used. The water-soluble organic solvent is preferably dissolved in 100 parts by mass of water at 25°C in an amount of 50 parts by mass or more under 1 atm. The water-soluble organic solvent is more preferably an organic solvent that dissolves in 100 parts by mass of water at 25°C in an amount of 70 parts by mass or more under 1 atm, and even more preferably an organic solvent that dissolves in 100 parts by mass of water at 25°C in an amount of 90 parts by mass or more under 1 atm.

Examples of such the water-soluble organic solvent include: alkyl alcohol having 1 to 5 carbon atoms such as methyl alcohol, ethyl alcohol, n-propyl alcohol, isopropyl alcohol, n-butyl alcohol, sec-butyl alcohol, tert-butyl alcohol, isobutyl alcohol, and n-pentanol; monovalent alcohol such as 3-methoxy-3-methyl-1-butanol, 3-methoxy-1-propanol, 1-methoxy-2-propanol, and 3-methoxy-n-butanol; amide such as 1-dimethylformamide, dimethylacetamide, 3-methoxypropanamide, 3-butoxypropanamide, N,N-dimethyl-3-methoxypropanamide, N,N-dimethyl-3-methoxypropanamide, N,N-dimethyl-3-butoxypropanamide, and N,N-dimethyl-3-butoxypropanamide; ketone or keto alcohol such as acetone and diacetone alcohol; ether such as tetrahydrofuran and dioxane; an oxyethylene or oxypropylene copolymer such as polyethylene glycol and polypropylene glycol; diol such as ethylene glycol, propylene glycol, diethylene glycol, dipropylene glycol, 1,3-propanediol, isobutylene glycol, triethylene glycol, tripropylene glycol, tetraethylene glycol, 1,3-propanediol, 2-methyl-1,2-propanediol, 2-methyl-1,2-propanediol, 1,2-butanediol, 1,3-butanediol, 1,4-butanediol, 1,2-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, and 2-methyl-2,4-pentanediol; triol such as glycerin, trimethylolethane, trimethylolpropane, and 1,2,6-hexanetriol; tetravalent alcohol such as mesoerythritol and pentaerythritol; monoalkyl ether such as ethylene glycol monomethyl (or ethyl, isopropyl, n-butyl, isobutyl, n-hexyl, 2-ethylhexyl) ether, diethylene glycol monomethyl (or ethyl, isopropyl, n-butyl, isobutyl, n-hexyl, 2-ethylhexyl) ether, triethylene glycol monomethyl (or ethyl, isopropyl, n-butyl, isobutyl) ether, propylene glycol monomethyl (or ethyl, isopropyl, n-butyl, isobutyl) ether and dipropylene glycol monomethyl (or ethyl, isopropyl, n-butyl, isobutyl) ether; dialkyl ether of polyhydric alcohol such as diethylene glycol dimethyl ether, diethylene glycol diethyl ether, diethylene glycol ethyl methyl ether, triethylene glycol dimethyl ether, triethylene glycol diethyl ether, tetraethylene glycol dimethyl ether, tetraethylene glycol diethyl ether, propylene glycol dimethyl ether, propylene glycol diethyl ether, dipropylene glycol dimethyl ether, and dipropylene glycol diethyl ether; alkanol amine such as monoethanolamine, diethanolamine, triethanol amine, N-methyl ethanol amine, N-ethyl ethanol amine, N-butyl ethanol amine, N-methyl diethanolamine, N-ethyl diethanolamine, and N-butyl diethanolamine; a nitrogen-containing heterocyclic compound such as N-methyl-2-pyrrolidone, 2-pyrrolidone, and 1,3-dimethyl-2-imidazolidinone; and a cyclic compound such as γ-butyrolactone and sulfolan.

### [Water]

The aqueous ink composition according to the present embodiment may contain water. As water, it is preferable to use deionized water instead of water containing various ions. A content of water is not particularly limited as long as each component can be dispersed or dissolved.

### [Surfactant]

The aqueous ink composition according to the present embodiment contains the polysiloxane-based surfactant. As the polysiloxane-based surfactant, those contained in the above nonaqueous ink composition can be used.

The content of the polysiloxane-based surfactant is not particularly limited as long as the content thereof is in a range of 0.01% by mass or more and 2.0% by mass or less in a total amount of the aqueous ink composition, and the lower limit of the content of the polysiloxane-based surfactant is preferably 0.03% by mass or more, and more preferably 0.05% by mass or more in the total amount of the aqueous ink composition. The upper limit of the content of the polysiloxane-based surfactant is preferably 1.5% by mass or less, and more preferably 1.0% by mass or less in the total amount of the aqueous ink composition.

In addition, the aqueous ink composition according to the present embodiment may contain a surfactant different from the surfactant having the siloxane skeleton. Examples of the surfactant include an anionic surfactant, a nonionic surfactant, a fluorine-based surfactant, an alkylene oxide-modified acetylene glycol-based surfactant, and an alkylene oxide-unmodified acetylene glycol-based surfactant.

### [Resin]

The aqueous ink composition according to the present embodiment may contain a resin. As the resin, a resin emulsion is preferable from a viewpoint of excellent fixability and excellent water resistance of a printed product. In addition, by forming the resin emulsion, the resin can be dispersed in the ink composition in a form of resin fine particles by a static repulsive force or a steric repulsive force.

Specifically, an acrylic resin, a polystyrene resin, a polyester resin, a vinyl chloride resin, a vinyl acetate resin, a vinyl chloride-vinyl acetate copolymer resin, a polyethylene resin, an urethane resin, a silicone (silicon) resin, an acrylic amide resin, an epoxy resin, or a copolymer resin or mixtures thereof can be used. These are preferable because they can improve solvent resistance in addition to water resistance. Among them, a substance containing the acrylic resin is preferable because the resin can have excellent ejection stability, water resistance, and solvent resistance.

The acrylic resin is not particularly limited as long as it is contained as a main component of a monomer that constitutes a (meth) acrylic acid ester monomer. As the (meth) acrylic acid ester monomer, a known compound can be used, and a monofunctional (meth) acrylic acid ester can be preferably used. Examples thereof include alkyl (meth) acrylate, (meth) acrylic acid aralkyl ester, and (meth) acrylic acid alkoxyalkyl ester. Specifically, examples thereof include (meth) acrylic acid ester such as methyl (meth) acrylate, ethyl (meth) acrylate, n-propyl (meth) acrylate, iso-propyl (meth) acrylate, n-butyl (meth) acrylate, sec-butyl (meth) acrylate, iso-butyl (meth) acrylate, tert-butyl (meth) acrylate, pentyl (meth) acrylate, neopentyl (meth) acrylate, hexyl (meth) acrylate, 2-ethylhexyl (meth) acrylate, octyl (meth) acrylate, iso-octyl (meth) acrylate, nonyl (meth) acrylate, iso-nonyl (meth) acrylate, dodecyl (meth) acrylate, tridecyl (meth) acrylate, stearyl (meth) acrylate, cyclopentyl (meth) acrylate, cyclohexyl (meth) acrylate, 2-methylcyclohexyl (meth) acrylate, dicyclopentayl (meth) acrylate, dicyclopentenyl (meth) acrylate, dicyclopentayloxyethyl (meth) acrylate, dicyclopentenyloxyethyl (meth) acrylate, dicyclohexyl (meth) acrylate, isobornyl (meth) acrylate, adamantyl (meth) acrylate, allyl (meth) acrylate, propargyl (meth) acrylate, phenyl (meth) acrylate, naphthyl (meth) acrylate, anthracenyl (meth) acrylate, anthranonyl (meth) acrylate, piperonyl (meth) acrylate, salicylic (meth) acrylate, furyl (meth) acrylate, furfuryl (meth) acrylate, tetrahydrofuryl (meth) acrylate, tetrahydrofurfuryl (meth) acrylate, pyranyl (meth) acrylate, benzyl (meth) acrylate, phenethyl (meth) acrylate, cresyl (meth) acrylate, glycidyl (meth) acrylate, 3,4-epoxycyclohexylmethyl (meth) acrylate, 3,4-epoxycyclohexylethyl (meth) acrylate, 1,1,1-trifluoroethyl (meth) acrylate, perfluoroethyl (meth) acrylate, perfluoro-n-propyl (meth) acrylate, perfluoro-iso-propyl (meth) acrylate, heptadecafluorodecyl (meth) acrylate, triphenylmethyl (meth) acrylate, cumyl (meth) acrylate, 3- (N,N-dimethylamino) propyl (meth) acrylate, methoxyethyl (meth) acrylate, ethoxyethyl (meth) acrylate, butoxy ethyl (meth) acrylate, 2-cyanoethyl (meth) acrylate, dimethylamino ethyl (meth) acrylate, diethylaminoethyl (meth) acrylate, trimethoxysilylpropyl (meth) acrylate, triethoxysilylpropyl (meth) acrylate, 3-methacryloxypropylmethyldiethoxysilane, and 3-methacryloxypropylmethyldimethoxysilane.

The monomer that constitutes the acrylic resin may include an acid group-containing monomer having an acid group, a hydroxyl group-containing monomer having a hydroxyl group, and an amino group-containing monomer having an amino group. Examples of the acid group-containing monomer having the acid group include a carboxyl group-containing monomer having an ethylenically unsaturated double bond and a carboxyl group such as a carboxyl group-containing aliphatic monomer such as acrylic acid, methacrylic acid, itaconic acid, fumaric acid, maleic acid, crotonic acid, sitoracic acid, maleic anhydride, maleic acid monomethyl ester, maleic acid monobutyl ester, itaconic acid monomethyl ester, itaconic acid monobutyl ester, vinylbenzoic acid, oxalic acid monohydroxyethyl (meth) acrylate, and carboxyl group-terminated caprolactone-modified (meth) acrylate. The hydroxyl group-containing monomer having the hydroxyl group is not particularly limited as long as the hydroxyl group-containing monomer has an unsaturated double bond and the hydroxyl group, and examples thereof include 2-hydroxyethyl (meth) acrylate, 2-hydroxypropyl (meth) acrylate, 3-hydroxyethyl (meth) acrylate, 3-hydroxypropyl (meth) acrylate, 2-hydroxybutyl (meth) acrylate, 4-hydroxybutyl (meth) acrylate, caprolactone-modified hydroxy (meth) acrylate, methyl α-(hydroxymethyl) (meth) acrylate, ethyl α- (hydroxymethyl) (meth) acrylate, n-butyl α-(hydroxymethyl) (meth) acrylate, 1,4-cyclohexanedimethanol mono (meth) acrylate, and 4-hydroxybutyl (meth) acrylate. The amino group-containing monomer is not particularly limited as long as the amino group-containing monomer has the unsaturated double bond and the amino group, and examples thereof include: an acrylic amide compound such as (meth) acrylic amide N-monomethyl (meth) acrylic amide, N-monoethyl (meth) acrylic amide, N,N-dimethyl (meth) acrylic amide, N-n-propyl (meth) acrylic amide, N-isopropyl (meth) acrylic amide, methylene bis (meth) acrylic amide, N-methylol (meth) acrylic amide, N-butoxymethyl (meth) acrylic amide, dimethylamino ethyl (meth) acrylic amide, N,N-dimethylaminopropyl acrylic amide, and diacetone acrylamide; a nitrogen atom-containing (meth) acrylate compound such as dimethylamino ethyl (meth) acrylate, diethylaminoethyl (meth) acrylate, and ethylene oxide adduct (meth) acrylate of morpholin; N-vinylpyrrolidone, N-vinylpyridine, N-vinylimidazole, N-vinylpyrrole, N-vinyloxazolidone, N-vinylsuccinimide, N-vinylmethylcarbamate, N,N-methylvinylacetamide, (meth) acryloyloxyethyltrimethylammonium chloride, 2-isopropenyl-2-oxazoline, 2-vinyl-2-oxazoline, and (meth) acrylonitrile.

The monomer that constitutes the acrylic resin may be a monomer having another monomer as necessary in addition to the above (meth) acrylic acid ester monomer and the like. Such another monomer is not particularly limited as long as the monomer can be copolymerized with the above (meth) acrylic acid ester monomer and has desired water resistance and solvent resistance, and may be a monofunctional monomer having one ethylenically unsaturated double bond or a polyfunctional monomer having two or more ethylenically unsaturated double bonds. Examples of such another monomer include: a vinyl monomer such as vinyl acetate, vinyl chloride, vinylidene chloride, vinyl fluoride, vinylidene fluoride, N-vinylpyrolidone, vinyl pyridine, N-vinylcarbazole, vinyl imidazole, vinyl ether, vinyl ketone, and vinyl pyrolidone; an aromatic vinyl monomer such as styrene, α-, o-, m-, and p-alkyl of the styrene, nitro, cyano, amide, an ester derivative, vinyl toluene, and chlorostyrene; an olefin monomer such as ethylene, propylene, and isopropylene; a diene monomer such as butadiene and chloroprene; and a vinyl cyanide compound monomer such as acrylonitrile and methacrylonitrile. Alternatively, examples of such another monomer include: a diacrylate compound such as polyethylene glycol diacrylate, triethylene glycol diacrylate, and 1,3-butylene glycol diacrylate; a triacrylate compound such as trimethylolpropane triacrylate, trimethylolethane triacrylate, and tetramethylolmethane triacrylate; a dimethacrylate compound such as ethylene glycol dimethacrylate, diethylene glycol dimethacrylate, and triethylene glycol dimethacrylate; and a trimethacrylate compound such as trimethylolpropane trimethacrylate and trimethylolethane trimethacrylate; and divinylbenzene. The acrylic resin can be formed using these monomers, but a form of copolymerization of the monomers is not particularly limited, and may be, for example, a block copolymer, a random copolymer, or a graft copolymer. The resin emulsion can be produced by, for example, an emulsion polymerization reaction and neutralization after the reaction. As an emulsifier, an ordinary polymer surfactant may be used, or a reactive surfactant having an unsaturated bond may be used. A synthesis method is not particularly limited, and for example, water, a monomer, the emulsifier, and a polymerization initiator can be mixed and emulsion polymerized in presence of the reactive surfactant, a non-reactive surfactant, polyvinyl alcohol, a cellulose derivative, or the like. Alternatively, the resin emulsion can also be obtained by mixing the resin fine particles with water together with the surfactant without performing an emulsion polymerization reaction. For example, the resin emulsion can be obtained by adding resin fine particles consisting of (meth) acrylic acid ester or styrene and (meth) acrylic acid ester and a surfactant into water and mixing them.

Examples of a commercially available resin emulsion include: Acrit WEM-031U, WEM-200U, WEM-321, WEM-3000, WEM-202U, and WEM-3008 (acrylic-urethane resin emulsion, manufactured by Taisei Fine Chemical Co., Ltd.); Acrit UW-550CS, UW-223SX, AKW107, and RKW-500 (acrylic resin emulsion, manufactured by Taisei Fine Chemical Co., Ltd.); LUBRIJET N240 (acrylic resin emulsion, manufactured by Lubrizol Corporation), Superflex 150, 210, 470, 500M, 620, 650, E2000, E4800, and R5002 (urethane resin emulsion, manufactured by Daiichi Kogyo Seiyaku Co., Ltd.); VINYBLAN 701FE35, 701FE50, 701FE65, 700, 701, 711, 737, and 747 (vinyl chloride-acrylic resin emulsion, manufactured by Nissin Chemical Industry Co., Ltd.); VINYBR_ANE 2706 and 2685 (acrylic resin emulsion, manufactured by Nissin Chemical Industry Co., Ltd.); Mowinyl 743N, 6600, 7470, and 7720 (acrylic resin emulsion, manufactured by Japan Coating Resin Co., Ltd.); and PRIMAL AC-261P, and AC-818 (acrylic resin particle emulsion, manufactured by Dow Chemical Company), but the examples are not limited thereto.

A content of the resin (resin emulsion) contained in the aqueous ink composition according to the present embodiment is not particularly limited, and a lower limit of the content of the resin is preferably 0.1% by mass or more, more preferably 0.5% by mass or more, even more preferably 1.0% by mass or more, and even more preferably 2.0% by mass or more in the total amount of the aqueous ink. An upper limit of the content of the resin is preferably 25% by mass or less, more preferably 20% by mass or less, and even more preferably 15% by mass or less in the total amount of the aqueous ink.

From a viewpoint of dispersion stability in the ink composition and ejection stability in inkjet ejection, an average particle diameter of the resin emulsion is preferably 30 nm or more, more preferably 40 nm or more, and even more preferably 50 nm or more. From the viewpoint of dispersion stability in the ink composition and ejection stability in inkjet ejection, the average particle diameter of the resin emulsion is preferably 300 nm or less, more preferably 270 nm or less, and even more preferably 250 nm or less. In the present embodiment, a number average particle diameter of the pigment can be measured at a measurement temperature of 25°C using a concentrated particle size analyzer (model: FPAR-1000, manufactured by Otsuka Electronics Co., Ltd.).

### [Colorant]

The aqueous ink composition according to the present embodiment may contain a colorant. As the colorant, those contained in the above nonaqueous ink composition can be used. The colorant is not particularly limited, and may be a dye-based colorant or a pigment-based colorant. From a viewpoint that the recorded matter has good resistance such as water resistance and light resistance, it is preferable to use a pigment (pigment-based colorant). The pigment may be a pigment dispersion in which the pigment is dispersed in a water-soluble solvent by a pigment dispersant, or may be a pigment dispersion, which is a self-dispersing pigment in which a surface of the pigment is directly modified with a hydrophilic group. In the present embodiment, the pigment that can be used in an inkjet recording ink may be a combination of a plurality of organic pigments or inorganic pigments described above, or may be a combination of the pigment dispersion in which the pigment is dispersed in the water-soluble solvent by the pigment dispersant described above and a self-dispersing pigment to be described below.

Examples of the self-dispersing pigment include those modified as the hydrophilic group with a carbonyl group, a carboxyl group, a hydroxyl group, a sulfonic acid group, a phosphorus-containing group, or the like. Alternatively, examples of commercially available products include "CAB-O-JET200, CAB-O-JET250C, CAB-O-JET260M, CAB-O-JET270Y, CAB-O-JET740Y, CAB-O-JET300, CAB-O-JET400, CAB-O-JET450C, CAB-O-JET465M, CAB-O-JET470Y, CAB-O-JET480V, CAB-O-JET352K, and CAB-O-JET554B, CAB-O-JET1027R" manufactured by Cabot Corporation, "Microjetblalack162, Aqua-Black001, BONJETBLACKCW-1, BONJETBLACKCW-2, and BONJETBLACKCW-3" manufactured by Orient Chemical Industries, Ltd., "Aqua-Black162, and Aqua-Black001" manufactured by Tokai Carbon Co., Ltd., "LIOJETWDBLACK002C" manufactured by Toyo Ink Co., Ltd., "SFColor" manufactured by Sanyo Color Works, Ltd., "FujiSPColor" manufactured by Fuji Pigment Co., Ltd., or "Hostajet" manufactured by Clariant Co., Ltd.

In the aqueous ink composition according to the present embodiment, a content of the pigment is not particularly limited, and may be appropriately adjusted as long as a desired image can be formed. Specifically, although the content of the pigment depends on the type of the pigment, the content of the pigment is preferably in a range of 0.05% by mass or more, and more preferably in a range of 0.1% by mass or more, in the total amount of the aqueous ink composition. The content of the pigment is preferably in a range of 20% by mass or less, and more preferably in a range of 10% by mass or less, in the total amount of the aqueous ink composition. By making the content of the pigment to be in the range of 0.05% by mass or more, or in the range of 20% by mass or less, an excellent balance can be obtained between the dispersion stability and the coloring power of the pigment.

### [Pigment Dispersant]

The aqueous ink composition according to the present embodiment may contain a pigment dispersant. Here, the pigment dispersant means a resin or a surfactant having a function of improving dispersibility of the pigment in the ink by adhering to a part of the surface of the pigment.

The pigment dispersant that can be used in the aqueous ink composition according to the present embodiment is not particularly limited. For example, a cationic surfactant, an anionic surfactant, a nonionic surfactant, an amphoteric surfactant, a silicone (silicon) surfactant, or a fluorine surfactant can be used. Of surfactants, a polymeric surfactant (polymeric dispersant) as mentioned below is preferable.

As the pigment dispersant that can be used in the aqueous ink composition according to the present embodiment, a water-soluble polymeric dispersant can be preferably used. Examples of the water-soluble polymeric dispersant include a dispersant having a polyester-based main chain, a polyacrylic-based main chain, a polyurethane-based main chain, a polyamine-based main chain, or a polycaptracton-based main chain and having a polar group such as an amino group, a carboxy group, a sulfo group, or a hydroxy group in a side chain. Examples of the water-soluble polymeric dispersant include: (co) polymers of unsaturated carboxylic acid ester such as polyacrylic acid ester; copolymers of an aromatic vinyl compound such as styrene and α-methylstyrene and unsaturated carboxylic acid ester such as acrylic acid ester; (partial) amine salts, (partial) ammonium salts, and (partial) alkylamine salts of (co) polymers of unsaturated carboxylic acids such as polyacrylic acid; a (co) polymer of a hydroxyl group-containing unsaturated carboxylic acid ester such as a hydroxyl group-containing polyacrylic acid ester and a modified product thereof; polyurethane; unsaturated polyamide; polysiloxane; a long-chain polyamino amide phosphate salt; a polyethyleneimine derivative (amides obtained by a reaction between poly (lower alkyleneimine) and a free carboxyl group-containing polyester, and bases thereof); and a polyallylamine derivative (a reaction product obtained by reacting polyallylamine with one or more compounds selected from three compounds: polyester having a free carboxyl group, polyamide, or a co-condensate (polyester amide) of ester and amide). Among them, the water-soluble polymeric dispersant containing a (meth) acrylic resin is preferable from a viewpoint of dispersion stability of an ink and image clarity of a printed product.

Specific examples of the water-soluble polymeric dispersant include SMA1440, SMA2625, SMA17352, SMA3840, SMA1000, SMA2000, and SMA3000 manufactured by SARTOMER Co., Ltd., JONCRYL67, JONCRYL678, JONCRYL586, JONCRYL611, JONCRYL680, JONCRYL682, JONCRYL690, JONCRYL819, JONCRYL-JDX5050, EFKA4550, EFKA4560, EFKA4585, EFKA5220, and EFKA6230 manufactured by BASF Japan Ltd., SOLSPERSE20000, SOLSPERSE27000, SOLSPERSE41000, SOLSPERSE41090, SOLSPERSE43000, SOLSPERSE44000, SOLSPERSE46000, SOLSPERSE47000, and SOLSPERSE54000 manufactured by Lubrizol Co., Ltd., and BYKJET-9150, BYKJET-9151, BYKJET-9170, DISPERBYK-168, DISPERBYK-190, DISPERBYK-198, DISPERBYK-2010, DISPERBYK-2012, and DISPERBYK-2015 manufactured by BYK Chemie Company.

The pigment that can be used in the aqueous ink composition according to the present embodiment may be a pigment dispersion in which the pigment is dispersed in the water-soluble solvent by the pigment dispersant, or may be a pigment dispersion, which is the self-dispersing pigment in which the surface of the pigment is directly modified with the hydrophilic group. In the present embodiment, the pigment that can be used in the aqueous ink composition may be a combination of the plurality of organic pigments or inorganic pigments described above, or may be a combination of the pigment dispersion in which the pigment is dispersed in the water-soluble solvent by the pigment dispersant described above and a self-dispersing pigment to be described below.

### [Other Components]

The aqueous ink composition according to the present embodiment may further contain other components as necessary, within a range that does not impair effects of the present disclosure. Examples of the other components include the antioxidant, the pigment, the resin, and the antifoaming agent.

### <<3. Method for Producing Ink Compositions>>

An ink composition according to the present embodiment can be produced by mixing the organic solvent A, the polysiloxane-based surfactant, and various components (for example, the resin and the colorant) using a paint shaker. At this time, each component may be dispersed in zirconia beads. If necessary, the ink composition may be prepared by adding other components after adjusting a dispersion in which the colorant is dispersed in a specific solvent. The nonaqueous ink composition according to the present embodiment may be adjusted to a desired dissolved oxygen amount or a desired dissolved nitrogen amount by, for example, performing a degassing treatment as necessary.

When the nonaqueous ink composition is produced, the organic solvent is preferably dried in advance. By drying the organic solvent in advance, an amount of moisture contained in the nonaqueous ink composition can be reduced. Examples of a method for drying the organic solvent include a method of spraying an inert gas (for example, a nitrogen gas) for a predetermined period of time, in which the inert gas is dried in an inert gas atmosphere such as nitrogen, a method of distilling and refining the organic solvent, a method of permeating the organic solvent through a semi-permeable membrane that selectively permeates water, and a method of selectively adsorbing water mixed in the organic solvent with a water adsorbent that adsorbs water.

### <<4. Ink Set>>

The ink set according to the present embodiment is an ink set including the above ink composition. The above ink composition can obtain the recorded matter having excellent glossiness and can effectively prevent bleeding in printing on the obtained recorded matter, and even in the ink set according to the present embodiment, bleeding in printing is prevented, and the recorded matter exhibiting excellent glossiness can be obtained.

In particular, when the ink composition is further applied onto an undried ink composition, an application amount of the ink composition on a base material (recording medium) inevitably increases, and bleeding is more likely to occur. Therefore, when the ink set contains a plurality of ink compositions, a problem of the present invention is particularly likely to occur, and among them, for example, an ink set containing a plurality of colored ink compositions which are ejected by an inkjet method to form a desired image (or an ink set containing a white ink composition containing a white colorant, an ink composition containing a brilliant pigment, and a clear ink composition containing no colorant in an ink set containing a coloring ink composition, and an ink set further containing a primer agent, an overcoat agent, an ink set-receiving solution, and the like in the ink set) particularly remarkably causes the problem of the present invention.

When the ink set contains an ink composition containing the polysiloxane-based surfactant in a range of 0.01% by mass or more and 2.0% by mass or less in a total amount of the ink composition together with the organic solvent A (at least one selected from the group consisting of the alkylamide-based solvent (a1) and the cyclic amide-based solvent (a2)), it is possible to effectively prevent bleeding in printing caused by containing a plurality of ink compositions.

By further applying the ink composition on the undried ink composition applied on the base material, the organic solvent A and the polysiloxane-based surfactant are necessarily contained in a mixture of the ink compositions applied on the base material. Accordingly, the ink set according to the present embodiment exhibits the effects of the present invention as long as the ink set contains at least one ink composition containing a predetermined amount of polysiloxane-based surfactant together with the organic solvent A. Among them, it is preferable that the ink set contains at least two or more ink compositions containing the predetermined amount of polysiloxane-based surfactant together with the organic solvent A, and it is more preferable that all of the ink compositions contained in the ink set contain the predetermined amount of polysiloxane-based surfactant together with the organic solvent A.

In order to obtain the ink set exhibiting the effects of the present invention, a ratio of the above ink composition (the ink composition containing the organic solvent A and containing the polysiloxane-based surfactant in the range of 0.01% by mass or more and 2.0% by mass or less in the total amount of the ink composition) in the mixture of the ink compositions on the base material is preferably 25% by mass or more, more preferably 40% by mass or more, and even more preferably 50% by mass or more.

Examples of the ink composition contained in the ink set according to the present embodiment include a black ink composition containing a black pigment, a white ink composition containing a white pigment, a colored ink composition of yellow, magenta, cyan, light magenta, light cyan, light black, orange, green, or red, a brilliant ink composition containing a brilliant pigment, and a clear ink composition not containing the colorant.

The ink set according to the present embodiment is not limited to a use form in which the ink composition is further applied onto the undried ink composition, and may be, for example, a use form in which the ink composition on the base material (recording medium) is dried and the ink composition is further applied onto the dried ink composition.

### <5. Recording Method Using Ink Composition>

A recording method according to the present embodiment is a recording method in which the above ink composition is applied to a surface of a base material. The above ink composition can obtain the recorded matter having excellent glossiness and can effectively prevent bleeding in printing on the obtained recorded matter, and even in the recording method according to the present embodiment, bleeding in printing is prevented, and the recorded matter exhibiting excellent glossiness can be obtained.

The method of applying the above ink composition to the surface of the base material is not particularly limited, and examples thereof include the inkjet method, a gravure method, a flexo method, a spray method, a screen method, and a coater method. Among them, the inkjet method is preferable. In a case of the inkjet method, a desired image can be formed by ejecting the ink to any place of a base material of a desired electronic image. In particular, when recording is performed at a higher speed by the inkjet method, the ink composition may be further ejected onto the undried ink composition, and bleeding is more likely to occur in printing. When the ink composition contains the polysiloxane-based surfactant in the range of 0.01% by mass or more and 2.0% by mass or less in the total amount of the ink composition together with the organic solvent A (at least one selected from the group consisting of the alkylamide-based solvent (a1) and the cyclic amide-based solvent (a2)), it is possible to effectively prevent bleeding in printing caused by using such an inkjet method.

When the ink composition is applied to the surface of the base material by the inkjet method, the method of ejecting ink composition by the inkjet method may be a piezo method using a piezoelectric element or a thermal method using a heating element, and is not particularly limited.

### <6. Method of Producing Recorded Matter>

The recording method using the above ink composition can also be defined as a method for producing a recorded matter. Also in the method for producing a recorded matter according to the present embodiment, it is possible to obtain a recorded matter in which bleeding in printing is prevented and excellent glossiness is exhibited.

### <7. Recorded Matter>

Each layer constituting the recorded matter produced by the method for producing a recorded matter according to the present embodiment described above will be described.

### [Medium (Recording Medium)]

The base material (recording medium) that can be used in the recording method according to the present embodiment is not particularly limited, and a resin base material, a non-absorbent base material such as metal and a plate glass, an absorbent base material such as paper or cloth, or a surface-coated base material such as a base material including a receiving layer, and various base materials can be used.

When a nonaqueous ink composition containing substantially no water is used, it is preferable that a surface mainly consists of a resin. In particular, since the ink composition contains the organic solvent A having permeability to the resin base material, bleeding in printing on a medium (recording medium) having a surface made of a resin is reduced, and the printing becomes clear. Examples of the resin include a polyvinyl chloride-based polymer, acryl, PET, polycarbonate, PE, and PP. In addition, the resin may also be used for a resin base material (so-called resin base material for lamination) on a premise that a film is attached to a recording surface of a recorded matter. In particular, a base material (recording medium) whose surface is made of a hard or soft polyvinyl chloride-based polymer is preferable. Examples of the base material (recording medium) whose surface is made of a polyvinyl chloride polymer include a polyvinyl chloride base material (film or sheet).

When an aqueous ink composition containing water as a main component is used, an absorbent base material such as paper or cloth, or a base material subjected to surface applying such as a base material having a receiving layer is preferable.

### [Recording Layer]

The recording layer is a layer formed by volatilizing a solvent contained in the ink composition, and is a layer for forming a desired image. By applying the above ink composition, a recorded matter having excellent glossiness can be obtained, and bleeding in printing on the obtained recorded matter can be effectively prevented.

The layer formed by volatilizing the solvent contained in the above ink composition may be formed of a plurality of layers. For example, a layer of a color ink (for example, yellow, magenta, cyan, or black) in the above ink composition may be formed on a layer of a white ink in the above ink composition.

### [Other Layers]

The recorded matter according to the present embodiment may further include a layer having a desired function on an upper surface of a decorative layer. For example, an overcoat layer containing at least one of a resin or a wax may be formed for a purpose of further imparting rubbing resistance and glossiness to the recorded matter. In addition, a layer expressing a feeling of unevenness (matte surface) may be formed on the surface by containing a filler or changing a film thickness for each pixel. Further, in order to impart weather resistance to the recorded matter, a weather resistant layer containing an ultraviolet absorber, a light stabilizer, or the like, a brilliant layer containing a brilliant pigment, or the like may be formed.

In the recorded matter according to the present embodiment, the recorded matter including the recording layer formed by the above ink composition has been described. For example, a layer having a desired function may be formed by ejecting the above ink composition onto a recording layer formed by a known ink composition in the related art. Further, a layer having a desired function may be formed by ejecting the above ink composition onto a recording layer formed by the above ink composition.

### <8. Inkjet Recording Device>

As an inkjet recording device that ejects the above ink composition by the inkjet method, a known device in the related art can be used. For example, an inkjet printer such as VersaArt RE-640 manufactured by Rowland DG Co., Ltd. can be used.

As an example of a configuration of the inkjet recording device, the inkjet recording device may be an on-carriage type and a serial printer type inkjet recording device, may be an off-carriage type inkjet recording device in which an ink cartridge is fixed to the outside, or may be a line printer type inkjet recording device in which an ink composition is ejected onto a recording medium (base material) without moving an inkjet head.

Further, the inkjet recording device preferably includes a heating mechanism and a fixing mechanism that fixes the base material. The solvent contained in the ink composition can be volatilized by controlling a surface temperature of the base material by the heating mechanism provided in the inkjet recording device to dry the ink composition landed on the base material (recording medium).

Further, by the fixing mechanism that fixes the base material, the ink composition can be dried in a state in which the base material (recording medium) is fixed, and uneven application of heat due to bending of the base material by heating can be prevented.

The heating mechanism provided in the inkjet recording device may be a preheater, a platen heater, an after-heater, or the like, may be a mechanism that blows warm air to the recorded matter, or may be a mechanism that heats the recorded matter by infrared rays or the like. Further, a plurality of these heating mechanisms may be combined.

The fixing mechanism that fixes the base material may be a fixing mechanism that fixes the base material to a predetermined fixture or a fixing mechanism that sucks and adsorbs the base material by a negative pressure, and is not particularly limited.

The inkjet head that ejects the above ink composition may be a piezo inkjet head using a piezoelectric element or a thermal inkjet head using a heating element, and is not particularly limited.

In addition, as described above, the inkjet recording device according to the present embodiment can be used for inks of respective colors such as yellow, magenta, cyan, and black, and inks of respective colors such as light magenta, light cyan, light black, orange, green, red, and white, and an order of colors to be printed and a position and configuration of a head are not particularly limited. In addition, the inkjet recording device according to the present embodiment may or may not include a winding mechanism for the recording medium (base material), a drying mechanism that dries a base material surface, and an ink circulation mechanism.

### [Examples]

Hereinafter, the present invention will be described in more detail with reference to Examples, but the present invention is not limited to these descriptions.

### 1. Preparation of Resin

### (1) Acrylic Resin

A mixture of 150g of methyl methacrylate, 50g of butyl methacrylate, and a predetermined amount of t-butylperoxy-2-ethylhexanoate (polymerization initiator) was added dropwise to 300g of diethylene glycol diethyl ether maintained at 100°C over 1.5 hours. After completion of dropwise addition, the obtained mixture was reacted at 100°C for 2 hours and then cooled to obtain a colorless and transparent polymer solution of methyl methacrylate. Thereafter, a solvent was sufficiently distilled off from the polymer solution to obtain a polymer of methyl methacrylate. At this time, an amount of the t-butylperoxy-2-ethylhexanoate, which is a polymerization initiator, was changed to control a polymerization average molecular weight of methyl methacrylate (acrylic resin) to 10,000 to 105,000 (A mass of the polymerization initiator used at this time is described in Table 1 below, and is indicated as "initiator amount" in Table 1.).

### (2) Vinyl Chloride-Vinyl Acetate Copolymer Resin

After nitrogen substitution, an autoclave equipped with a stirring device was charged with 100 parts by mass of deionized water, 40 parts by mass of methanol, 32 parts by mass of vinyl chloride, 5 parts by mass of vinyl acetate, 0.2 parts by mass of glycidyl methacrylate, 3.55 parts by mass of hydroxypropyl acrylate, 0.1 parts by mass of hydroxypropyl methyl cellulose (suspension agent), 0.026 parts by mass of di-2-ethylhexyl peroxydicarbonate (polymerization initiator), and a predetermined amount of di-3,5,5-trimethylhexanol peroxide (polymerization initiator), the obtained mixture was heated to 63°C while being stirred in a nitrogen gas atmosphere, and immediately after reaching 63°C, 48 parts by mass of vinyl chloride and a mixture of 0.6 parts by mass of glycidyl methacrylate and 10.65 parts of hydroxypropyl acrylate were continuously injected over 6 hours and 5.4 hours to cause a copolymerization reaction. When an internal pressure of the autoclave reached 0.3 MPa, a residual pressure was released, the resultant was cooled, resin slurry was taken out, filtered, and dried to give a vinyl chloride copolymer resin. At this time, the amount of di-3,5,5-trimethylhexanol peroxide, which is a polymerization initiator, was changed to control a polymerization average molecular weight of the vinyl chloride-vinyl acetate copolymer resin to 40,000 to 90,000 (A mass of the polymerization initiator used at this time is described in Table 1 below, and is indicated as "initiator amount" in Table 1.).

**[Table 1]**

| | | Weight average molecular weight (Relative molecular mass) | Initiator amount (g) |
|---|---|---|---|
| Acrylic resin | Synthetic resin 1 | Mw=10000 | 4.50 |
| | Synthetic resin 2 | Mw=15000 | 3.30 |
| | Synthetic resin 3 | Mw=30000 | 1.20 |
| | Synthetic resin 4 | Mw=80000 | 0.20 |
| | Synthetic resin 5 | Mw=105000 | 0.10 |
| Vinyl chloride-vinyl acetate copolymer resin | Synthetic resin 1 | Mw=40000 | 0.58 |
| | Synthetic resin 2 | Mw=50000 | 0.37 |
| | Synthetic resin 3 | Mw=75000 | 0.14 |
| | Synthetic resin 4 | Mw=90000 | 0.06 |

### 2. Production of Ink Composition

Ink compositions in Examples and Comparative Examples were prepared using the respective organic solvents, resins, dispersants, and pigments according to ratios of the respective component shown in the following tables. Specifically, the respective components were dispersed with zirconia beads using a paint shaker to prepare nonaqueous ink compositions. The unit is mass%.

### 3. Evaluation 1

### (Bleeding Property)

The ink compositions in Examples and Comparative Examples were evaluated for a bleeding property. Specifically, the ink compositions in Examples and Comparative Examples were used to print an image having 6 pt characters having a color different from that of a solid portion in the solid portion having each color on a recording medium (glued polyvinyl chloride film (IMAGin JT5829R, manufactured by MACtac) in a high-quality printing mode (1440 × 720 dpi) at a base material surface temperature of 40°C by an inkjet method using an inkjet printer (trade name: VersaArt RE-640, manufactured by Rowland DG Co., Ltd.), and the obtained printed matter was dried in an oven at 60°C for 5 minutes, and then bleeding of the printed matter was visually observed with a loupe (x10) (this is indicated as "bleeding property" in the table). Evaluation Standard Evaluation 5: no ink bleeding is observed with the loupe. Evaluation 4: no ink bleeding is visually observed, and 6 pt characters are clear. Evaluation 3: slight ink bleeding is visually observed, but design is not impaired. Evaluation 2: bleeding of ink is visually observed, but 6 pt characters are identifiable. Evaluation 1: significant bleeding of ink is visually observed, and 6 pt characters cannot be visually recognized.

### (Glossiness)

The ink compositions in Examples and Comparative Examples were evaluated for glossiness. Specifically, in the same manner as in the above bleeding property evaluation, the nonaqueous ink compositions were printed on a recording medium (glued polyvinyl chloride film (IMAGin JT5829R, manufactured by MACtac) in a high-quality printing mode (1440 × 720 dpi) at a base material surface temperature of 40°C to form a solid portion, after drying in an oven at 60°C for 5 minutes, 20° gloss level of the printed matter was measured. The gloss level was measured with a handy type gloss meter Phopoint IQ-S (manufactured by Konica Minolta Co., Ltd.) (this is indicated as "glossiness" in the table). Evaluation Standard

Evaluation 5: the 20° gloss is 70 or more. Evaluation 4: the 20° gloss is 65 or more and less than 70. Evaluation 3: the 20° gloss is 55 or more and less than 65. Evaluation 2: the 20° gloss is 50 or more and less than 55. Evaluation 1: the 20° gloss is less than 50.

### (Surface Drying Property)

The ink compositions in Examples and Comparative Examples were evaluated for a surface drying property. Specifically, a solid image was printed on a recording medium (glued polyvinyl chloride film (IMAGin JT5829R, manufactured by MACtac)) in a high-quality printing mode (1440 × 720 dpi) in the same manner as in the above-mentioned bleeding property evaluation, and time until the solid image was dried at 40°C was measured (this is indicated as a "surface drying property" in the table).

### Evaluation Standard

Evaluation 5: drying is performed in less than 2 minutes. Evaluation 4: drying is performed in 2 minutes or more and less than 4 minutes. Evaluation 3: drying is performed in 4 minutes or more and less than 6 minutes. Evaluation 2: drying is performed for 6 minutes or more and less than 8 minutes. Evaluation 1: drying is performed in 8 minutes or more.

### (Coated Film Rubbing Resistance)

The ink compositions in Examples and Comparative Examples were evaluated for coated film rubbing resistance. Specifically, a solid image was printed on a recording medium (glued polyvinyl chloride film (IMAGin JT5829R, manufactured by MACtac)) in a high-quality printing mode (1440 × 720 dpi) in the same manner as in the above-mentioned bleeding property evaluation, and the printed solid image was dried at 40°C. A printed surface of a printed product was rubbed with a test cloth piece at a load of 200 g and 50 times back and forth, and the rubbing resistance was visually evaluated.

### (This is indicated as coated film rubbing resistance in the table). Evaluation Standard

Evaluation 5: an ink film was not peeled off, and no ink was adhered to the test cloth piece. Evaluation 4: the ink film was not peeled off, but the ink was adhered to the test cloth piece. Evaluation 3: the ink film was slightly peeled off and adhered to the test cloth piece. Evaluation 2: the ink film was slightly peeled off and adhered to the test cloth piece. Evaluation 1: most of the ink film was peeled off, and the ink film was adhered to the test cloth piece.

### (Member Suitability)

The ink compositions in Examples and Comparative Examples were evaluated for member suitability (member suitability to the inkjet head). Specifically, 0.2 g of a cured product obtained by drying an epoxy adhesive (two-liquid curing type epoxy adhesive "1500", manufactured by Cemedine Co., Ltd.) used for members of the inkjet head at 60°C for one day was immersed in the ink compositions in Examples and Comparative Examples and left at 60°C for 1 week, and an immersion test was performed to measure a change in weight of the cured product (indicated as "member suitability" in the table). Evaluation Standard

Evaluation 5: a weight change rate is less than 3%, and the material of the epoxy adhesive does not deteriorate. Evaluation 4: the weight change rate is 3% or more and less than 5%, and the material of the epoxy adhesive does not deteriorate. Evaluation 3: the weight change rate is 5% or more and less than 10%, and the material of the epoxy adhesive does not deteriorate. Evaluation 2: the weight change rate is 10% or more and less than 15%, and the material of the epoxy adhesive does not deteriorate. Evaluation 1: the weight change rate is 15% or more and/or the material of the epoxy adhesive deteriorates.

**[Table 2]**

| Classification | Type | Name | Comparat ive Example 1 | Comparat ive Example 2 | Example 1 | Example 2 | Example 3 | Example 4 | Comparat ive Examples | Comparat ive Example 4 | Example5 | Example6 | Example7 | Comparat ive Example5 | Comparat ive Example6 |
|---|---|---|---|---|---|---|---|---|---|---|---|---|---|---|---|
| Organic solvent A | Alkylamide (a1) | DEF | 25.000 | 25.000 | 25.000 | 25.000 | 25.000 | 25.000 | 25.000 | 25.000 | 25.000 | 25.000 | 25.000 | 25.000 | |
| | | DEPA | | | | | | | | | | | | | |
| | | DEAA | | | | | | | | | | | | | |
| | | DMF | | | | | | | | | | | | | |
| | Cyclic amide (a2) | EC | | | | | | | | | | | | | |
| | | MEC | | | | | | | | | | | | | |
| | | NVC | | | | | | | | | | | | | |
| | | NMP | | | | | | | | | | | | | |
| Other solvents | Dialkyl ether | DBDG | | | | | | | | | | | | | |
| | | MEDG | 10.000 | 10.000 | 10.000 | 10.000 | 10.000 | 10.000 | 10.000 | 10.000 | 10.000 | 10.000 | 10.000 | 10.000 | 10.000 |
| | | DEDG | 51.000 | 50.995 | 50.990 | 50.900 | 50.500 | 49.000 | 48.000 | 50.995 | 50.990 | 50.900 | 49.000 | 48.000 | 75.900 |
| | | DMFDG | | | | | | | | | | | | | |
| | Monoalkyl ether | BTG | 5000 | 5000 | 5000 | 5000 | 5000 | 5000 | 5000 | 5000 | 5000 | 5000 | 5000 | 5000 | 5000 |
| | | MFTG | | | | | | | | | | | | | |
| | | MFDG | | | | | | | | | | | | | |
| | Lactone | GBL | | | | | | | | | | | | | |
| | | DVL | | | | | | | | | | | | | |
| | | ECL | | | | | | | | | | | | | |
| | Carbonic acid ester | PC | | | | | | | | | | | | | |
| | Acetate | DEGmEEA | | | | | | | | | | | | | |
| | Lactate ester | EL | | | | | | | | | | | | | |
| Polysiloxane-based surfactant | Polyether-modified | BYK-302 | | | | | | | | | | | | | |
| | | BYK-320 | | | | | | | | | | | | | |
| | | BYK-331 | | 0.005 | 0.010 | 0.100 | 0.500 | 2000 | 3.000 | | | | | | 0.100 |
| | | BYK-333 | | | | | | | | | | | | | |
| | | BYK-377 | | | | | | | | | | | | | |
| | | BYK-UV3500 | | | | | | | | | | | | | |
| | | BYK-UV3510 | | | | | | | | | | | | | |
| | Polyester-modified | BYK-313 | | | | | | | | | | | | | |
| | | BYK-315N | | | | | | | | 0.005 | 0.010 | 0.100 | 2000 | 3.000 | |
| | | BYK-370 | | | | | | | | | | | | | |
| | | BYK-UV3570 | | | | | | | | | | | | | |
| | Aralkyl-modified | BYK-322 | | | | | | | | | | | | | |
| | | BYK-323 | | | | | | | | | | | | | |
| Acrylic surfactant | | BYK-350 | | | | | | | | | | | | | |
| | | BYK-361N | | | | | | | | | | | | | |
| Resin | Acrylic resin | Synthetic resin 1 | | | | | | | | | | | | | |
| | | Synthetic resin 2 | | | | | | | | | | | | | |
| | | Synthetic resin 3 | 3.000 | 3.000 | 3.000 | 3.000 | 3.000 | 3.000 | 3.000 | 3.000 | 3.000 | 3.000 | 3.000 | 3.000 | 3.000 |
| | | Synthetic resin 4 | | | | | | | | | | | | | |
| | | Synthetic resin 5 | | | | | | | | | | | | | |
| | Vinyl chloride-vinyl acetate copolymer resin | Synthetic resin 1 | 1.500 | 1.500 | 1.500 | 1.500 | 1.500 | 1.500 | 1.500 | 1.500 | 1.500 | 1.500 | 1.500 | 1.500 | 1.500 |
| | | Synthetic resin 2 | | | | | | | | | | | | | |
| | | Synthetic resin 3 | | | | | | | | | | | | | |
| | | Synthetic resin 4 | | | | | | | | | | | | | |
| Dispersant | Polycaprolactone-based | Solsperse32000 | 1.500 | 1.500 | 1.500 | 1.500 | 1.500 | 1.500 | 1.500 | 1.500 | 1.500 | 1.500 | 1.500 | 1.500 | 1.500 |
| | | Solsperse33000 | | | | | | | | | | | | | |
| Pigment | Carbon black | | | | | | | | | | | | | | |
| | Cyan (C. I. Pigment Blue 15: 4) | | 3.000 | 3.000 | 3.000 | 3.000 | 3.000 | 3.000 | 3.000 | 3.000 | 3.000 | 3.000 | 3.000 | 3.000 | 3.000 |
| | Magenta (C. I. Pigment Red 122) | | | | | | | | | | | | | | |
| | Magenta (C. I. Pigment Violet 19) | | | | | | | | | | | | | | |
| | Yellow (C. I. Pigment Yellow 155) | | | | | | | | | | | | | | |
| | Yellow (C. I. Pigment Yellow 150) | | | | | | | | | | | | | | |
| | Orange (C. I. Pigment Orange 43) | | | | | | | | | | | | | | |
| | Orange (C. I. Pigment Orange 64) | | | | | | | | | | | | | | |
| | Green (C. I. Pigment Green 36) | | | | | | | | | | | | | | |
| | Green (C. I. Pigment Green 58) | | | | | | | | | | | | | | |
| | Red (C. I. Pigment Red 177) | | | | | | | | | | | | | | |
| | Red (C. I. Pigment Red 254) | | | | | | | | | | | | | | |
| | White (C. I. Pigment White 6) | | | | | | | | | | | | | | |
| | Total | | 100.000 | 100.000 | 100.000 | 100.000 | 100.000 | 100.000 | 100.000 | 100.000 | 100.000 | 100.000 | 100.000 | 100.000 | 100.000 |
| Evaluation | Bleeding property | | 1 | 1 | 3 | 5 | 5 | 5 | 3 | 1 | 3 | 5 | 5 | 3 | 1 |
| | Glossiness | | 1 | 1 | 3 | 5 | 4 | 3 | 1 | 1 | 3 | 4 | 3 | 1 | 5 |
| | Surface drying property | | 5 | 5 | 5 | 5 | 5 | 5 | 5 | 5 | 5 | 5 | 5 | 5 | 1 |
| | Coated film rubbing resistance | | 1 | 2 | 3 | 5 | 5 | 5 | 5 | 2 | 3 | 4 | 4 | 5 | 3 |
| | Member suitability | | 4 | 4 | 4 | 4 | 4 | 4 | 4 | 4 | 4 | 4 | 4 | 4 | 5 |

**[Table 3]**

| Classification | Type | Name | Examples | Example9 | Example1 0 | Example1 1 | Example1 2 | Example1 3 | Example1 4 | Example1 5 | Comparat ive Example7 | Example1 6 | Example1 7 | Example1 8 | Example1 9 |
|---|---|---|---|---|---|---|---|---|---|---|---|---|---|---|---|
| Organic solvent A | Alkylamide (a1) | DEF | 0.500 | 1.000 | 5000 | 25.000 | 50.000 | 90.000 | 90.000 | 93.150 | | | | | |
| | | DEPA | | | | | | | | | | | | | |
| | | DEAA | | | | | | | | | | | | | |
| | | DMF | | | | | | | | | | | | | |
| | Cyclic amide (a2) | EC | | | | | | | | | | 2000 | 15.000 | 25.000 | 40.000 |
| | | MEC | | | | | | | | | | | | | |
| | | NVC | | | | | | | | | | | | | |
| | | NMP | | | | | | | | | | | | | |
| Other solvents | Dialkyl ether | DBDG | | | | | | | | | | | | | |
| | | MEDG | 10.000 | 10.000 | 10.000 | 10.000 | 10.000 | | | | 10.000 | 10.000 | 10.000 | 10.000 | 10.000 |
| | | DEDG | 75.400 | 74.900 | 70.900 | 54.900 | 25.900 | | | | 50.900 | 73.900 | 60.900 | 50.900 | 35.900 |
| | | DMFDG | | | | | | | | | | | | | |
| | Monoalkyl ether | BTG | 5000 | 5000 | 5000 | 5000 | 5000 | 3.150 | 4.900 | | 5000 | 5000 | 5000 | 5000 | 5000 |
| | | MFTG | | | | | | | | | | | | | |
| | | MFDG | | | | | | | | | | | | | |
| | Lactone | GBL | | | | | | | | | 25.000 | | | | |
| | | DVL | | | | | | | | | | | | | |
| | | ECL | | | | | | | | | | | | | |
| | Carbonic acid ester | PC | | | | | | | | | | | | | |
| | Acetate | DEGmEEA | | | | | | | | | | | | | |
| | Lactate ester | EL | | | | | | | | | | | | | |
| Polysiloxane-based surfactant | Polyether-modified | BYK-302 | | | | | | | | | | | | | |
| | | BYK-320 | | | | | | | | | | | | | |
| | | BYK-331 | 0.100 | 0.100 | 0.100 | 0.100 | 0.100 | 0.100 | 0.100 | 0.100 | 0.100 | 0.100 | 0.100 | 0.100 | 0.100 |
| | | BYK-333 | | | | | | | | | | | | | |
| | | BYK-377 | | | | | | | | | | | | | |
| | | BYK-UV3500 | | | | | | | | | | | | | |
| | | BYK-UV3510 | | | | | | | | | | | | | |
| | Polyester-modified | BYK-313 | | | | | | | | | | | | | |
| | | BYK-315N | | | | | | | | | | | | | |
| | | BYK-370 | | | | | | | | | | | | | |
| | | BYK-UV3570 | | | | | | | | | | | | | |
| | Aralkyl-modified | BYK-322 | | | | | | | | | | | | | |
| | | BYK-323 | | | | | | | | | | | | | |
| Acrylic surfactant | | BYK-350 | | | | | | | | | | | | | |
| | | BYK-361N | | | | | | | | | | | | | |
| Resin | Acrylic resin | Synthetic resin 1 | | | | | | | | | | | | | |
| | | Synthetic resin 2 | | | | | | | | | | | | | |
| | | Synthetic resin 3 | 3.000 | 3.000 | 3.000 | 3.000 | 3.000 | 3.000 | 3.000 | 3.000 | 3.000 | 3.000 | 3.000 | 3.000 | 3.000 |
| | | Synthetic resin 4 | | | | | | | | | | | | | |
| | | Synthetic resin 5 | | | | | | | | | | | | | |
| | Vinyl chloride-vinyl acetate copolymer resin | Synthetic resin 1 | 1.500 | 1.500 | 1.500 | 2.000 | 1.500 | 1.500 | 2.000 | 1.500 | 1.500 | 1.500 | 1.500 | 1.500 | 1.500 |
| | | Synthetic resin 2 | | | | | | | | | | | | | |
| | | Synthetic resin 3 | | | | | | | | | | | | | |
| | | Synthetic resin 4 | | | | | | | | | | | | | |
| Dispersant | Polycaprolactone-based | Solsperse32000 | 1.500 | 1.500 | 1.500 | | 1.500 | 0.750 | | 0.750 | 1.500 | 1.500 | 1.500 | 1.500 | 1.500 |
| | | Solsperse33000 | | | | | | | | | | | | | |
| Pigment | Carbon black | | | | | | | | | | | | | | |
| | Cyan (C. I. Pigment Blue 15: 4) | | 3.000 | 3.000 | 3.000 | | 3.000 | 1.500 | | 1.500 | 3.000 | 3.000 | 3.000 | 3.000 | 3.000 |
| | Magenta (C. I. Pigment Red 122) | | | | | | | | | | | | | | |
| | Magenta (C. I. Pigment Violet 19) | | | | | | | | | | | | | | |
| | Yellow (C. I. Pigment Yellow 155) | | | | | | | | | | | | | | |
| | Yellow (C. I. Pigment Yellow 150) | | | | | | | | | | | | | | |
| | Orange (C. I. Pigment Orange 43) | | | | | | | | | | | | | | |
| | Orange (C. I. Pigment Orange 64) | | | | | | | | | | | | | | |
| | Green (C. I. Pigment Green 36) | | | | | | | | | | | | | | |
| | Green (C. I. Pigment Green 58) | | | | | | | | | | | | | | |
| | Red (C. I. Pigment Red 177) | | | | | | | | | | | | | | |
| | Red (C. I. Pigment Red 254) | | | | | | | | | | | | | | |
| | White (C. I. Pigment White 6) | | | | | | | | | | | | | | |
| | Total | | 100.000 | 100.000 | 100.000 | 100.000 | 100.000 | 100.000 | 100.000 | 100.000 | 100.000 | 100.000 | 100.000 | 100.000 | 100.000 |
| Evaluation | Bleeding property | | 2 | 3 | 3 | 5 | 5 | 5 | 5 | 5 | 5 | 3 | 3 | 5 | 5 |
| | Glossiness | | 5 | 5 | 5 | 5 | 4 | 3 | 3 | 2 | 2 | 5 | 5 | 5 | 4 |
| | Surface drying property | | 2 | 3 | 4 | 5 | 5 | 5 | 5 | 5 | 5 | 3 | 4 | 4 | 3 |
| | Coated film rubbing resistance | | 3 | 3 | 4 | 5 | 5 | 5 | 5 | 5 | 5 | 3 | 3 | 5 | 5 |
| | Member suitability | | 5 | 5 | 5 | 4 | 3 | 3 | 3 | 2 | 1 | 4 | 4 | 3 | 3 |

**[Table 4]**

| Classification | Type | Name | Example2 0 | Example2 1 | Example2 2 | Example2 3 | Example2 4 | Example2 5 | Example2 6 | Example2 7 | Example2 8 | Example2 9 | Example3 0 | Example3 1 | Example3 2 |
|---|---|---|---|---|---|---|---|---|---|---|---|---|---|---|---|
| Organic solvent A | Alkylamide (a1) | DEF | 10.000 | 50.000 | 90.000 | | | | | | | 25.000 | 25.000 | 25.000 | 25.000 |
| | | DEPA | | | | 25.000 | | | | | | | | | |
| | | DEAA | | | | | 25.000 | | | | | | | | |
| | | DMF | | | | | | 25.000 | | | | | | | |
| | Cyclic amide (a2) | EC | | | | | | | | | | | | | |
| | | MEC | | | | | | | 25000 | | | | | | |
| | | NVC | | | | | | | | 25.000 | | | | | |
| | | NMP | | | | | | | | | 25.000 | | | | |
| Other solvents | Dialkyl ether | DBDG | | | | | | | | | | | | | |
| | | MEDG | 10.000 | 10.000 | | 10.000 | 10.000 | 10.000 | 10.000 | 10.000 | 10.000 | 10.000 | 10.000 | 10.000 | 10.000 |
| | | DEDG | 65.990 | 25.500 | | 50.900 | 50.900 | 50.900 | 50.900 | 50.900 | 50.900 | 50.900 | 50.900 | 50.900 | 50.900 |
| | | DMFDG | | | | | | | | | | | | | |
| | Monoalkyl ether | BTG | 5000 | 5.000 | 1.250 | 5000 | 5000 | 5000 | 5000 | 5000 | 5000 | 5000 | 5000 | 5000 | 5000 |
| | | MFTG | | | | | | | | | | | | | |
| | | MFDG | | | | | | | | | | | | | |
| | Lactone | GBL | | | | | | | | | | | | | |
| | | DVL | | | | | | | | | | | | | |
| | | ECL | | | | | | | | | | | | | |
| | Carbonic acid ester | PC | | | | | | | | | | | | | |
| | Acetate | DEGmEEA | | | | | | | | | | | | | |
| | Lactate ester | EL | | | | | | | | | | | | | |
| Polysiloxane-based surfactant | Polyether-modified | BYK-302 | | | | | | | | | | 0.100 | | | |
| | | BYK-320 | | | | | | | | | | | 0.100 | | |
| | | BYK-331 | 0.010 | 0.500 | 2000 | 0.100 | 0.100 | 0.100 | 0.100 | 0.100 | 0.100 | | | | |
| | | BYK-333 | | | | | | | | | | | | 0.100 | |
| | | BYK-377 | | | | | | | | | | | | | 0.100 |
| | | BYK-UV3500 | | | | | | | | | | | | | |
| | | BYK-UV3510 | | | | | | | | | | | | | |
| | Polyester-modified | BYK-313 | | | | | | | | | | | | | |
| | | BYK-315N | | | | | | | | | | | | | |
| | | BYK-370 | | | | | | | | | | | | | |
| | | BYK-UV3570 | | | | | | | | | | | | | |
| | Aralkyl-modified | BYK-322 | | | | | | | | | | | | | |
| | | BYK-323 | | | | | | | | | | | | | |
| Acrylic su rfactant | | BYK-350 | | | | | | | | | | | | | |
| | | BYK-361N | | | | | | | | | | | | | |
| Resin | Acrylic resin | Synthetic resin 1 | | | | | | | | | | | | | |
| | | Synthetic resin 2 | | | | | | | | | | | | | |
| | | Synthetic resin 3 | 3.000 | 3.000 | 3.000 | 3.000 | 3.000 | 3.000 | 3.000 | 3.000 | 3.000 | 3.000 | 3.000 | 3.000 | 3.000 |
| | | Synthetic resin 4 | | | | | | | | | | | | | |
| | | Synthetic resin 5 | | | | | | | | | | | | | |
| | Vinyl chloride-vinyl acetate copolymer resin | Synthetic resin 1 | 1.500 | 1.500 | 1.500 | 1.500 | 1.500 | 1.500 | 1.500 | 1.500 | 1.500 | 1.500 | 1.500 | 1.500 | 1.500 |
| | | Synthetic resin 2 | | | | | | | | | | | | | |
| | | Synthetic resin 3 | | | | | | | | | | | | | |
| | | Synthetic resin 4 | | | | | | | | | | | | | |
| Dispersant | Polycaprolactone-based | Solsperse32000 | 1.500 | 1.500 | 0.750 | 1.500 | 1.500 | 1.500 | 1.500 | 1.500 | 1.500 | 1.500 | 1.500 | 1.500 | 1.500 |
| | | Solsperse33000 | | | | | | | | | | | | | |
| Pigment | Carbon black | | | | | | | | | | | | | | |
| | Cyan (C. I. Pigment Blue 15: 4) | | 3.000 | 3.000 | 1.500 | 3.000 | 3.000 | 3.000 | 3.000 | 3.000 | 3.000 | 3.000 | 3.000 | 3.000 | 3.000 |
| | Magenta (C. I. Pigment Red 122) | | | | | | | | | | | | | | |
| | Magenta (C. I. Pigment Violet 19) | | | | | | | | | | | | | | |
| | Yellow (C. I. Pigment Yellow 155) | | | | | | | | | | | | | | |
| | Yellow (C. I. Pigment Yellow 150) | | | | | | | | | | | | | | |
| | Orange (C. I. Pigment Orange 43) | | | | | | | | | | | | | | |
| | Orange (C. I. Pigment Orange 64) | | | | | | | | | | | | | | |
| | Green (C. I. Pigment Green 36) | | | | | | | | | | | | | | |
| | Green (C. I. Pigment Green 58) | | | | | | | | | | | | | | |
| | Red (C. I. Pigment Red 177) | | | | | | | | | | | | | | |
| | Red (C. I. Pigment Red 254) | | | | | | | | | | | | | | |
| | White (C. I. Pigment White 6) | | | | | | | | | | | | | | |
| | Total | | 100.000 | 100.000 | 100.000 | 100.000 | 100.000 | 100.000 | 100.000 | 100.000 | 100.000 | 100.000 | 100.000 | 100.000 | 100.000 |
| Evaluation | Bleeding property | | 4 | 5 | 5 | 5 | 5 | 5 | 5 | 5 | 5 | 4 | 5 | 3 | 4 |
| | Glossiness | | 5 | 3 | 3 | 5 | 5 | 4 | 5 | 5 | 4 | 5 | 5 | 5 | 5 |
| | Surface drying property | | 5 | 5 | 5 | 4 | 4 | 5 | 4 | 4 | 5 | 5 | 5 | 5 | 5 |
| | Coated film rubbing resistance | | 4 | 5 | 5 | 5 | 5 | 5 | 5 | 5 | 5 | 5 | 4 | 5 | 4 |
| | Member suitability | | 5 | 3 | 3 | 4 | 4 | 2 | 3 | 3 | 2 | 4 | 4 | 4 | 4 |

**[Table 5]**

| Classification | Type | Name | Example3 3 | Example3 4 | Example3 5 | Example3 6 | Example3 7 | Example3 8 | Example3 9 | Comparat ive Example8 | Comparat ive Example9 | Example4 0 | Example4 1 | Example4 2 | Example4 3 |
|---|---|---|---|---|---|---|---|---|---|---|---|---|---|---|---|
| Organic solvent A | Alkylamide (a1) | DEF | 25.000 | 25.000 | 25.000 | 25.000 | 25.000 | 25.000 | 25.000 | 25.000 | 25.000 | 25.000 | 25.000 | 25.000 | 25.000 |
| | | DEPA | | | | | | | | | | | | | |
| | | DEAA | | | | | | | | | | | | | |
| | | DMF | | | | | | | | | | | | | |
| | Cyclic amide (a2) | EC | | | | | | | | | | | | | |
| | | MEC | | | | | | | | | | | | | |
| | | NVC | | | | | | | | | | | | | |
| | | NMP | | | | | | | | | | | | | |
| Other solvents | Dialkyl ether | DBDG | | | | | | | | | | | | | |
| | | MEDG | 10.000 | 10.000 | 10.000 | 10.000 | 10.000 | 10.000 | 10.000 | 10.000 | 10.000 | 10.000 | 10.000 | 10.000 | 10.000 |
| | | DEDG | 50.900 | 50.900 | 50.900 | 50.900 | 50.900 | 50.900 | 50.900 | 50.900 | 50.900 | 50.900 | 50.900 | 50.900 | 50.900 |
| | | DMFDG | | | | | | | | | | | | | |
| | Monoalkyl ether | BTG | 5000 | 5000 | 5000 | 5000 | 5000 | 5000 | 5000 | 5000 | 5000 | 5000 | 5000 | 5000 | 5000 |
| | | MFTG | | | | | | | | | | | | | |
| | | MFDG | | | | | | | | | | | | | |
| | Lactone | GBL | | | | | | | | | | | | | |
| | | DVL | | | | | | | | | | | | | |
| | | ECL | | | | | | | | | | | | | |
| | Carbonic acid ester | PC | | | | | | | | | | | | | |
| | Acetate | DEGmEEA | | | | | | | | | | | | | |
| | Lactate ester | EL | | | | | | | | | | | | | |
| Polysiloxane-based surfactant | Polyether-modified | BYK-302 | | | | | | | | | | | | | |
| | | BYK-320 | | | | | | | | | | | | | |
| | | BYK-331 | | | | | | | | | | 0.100 | 0.100 | 0.100 | 0.100 |
| | | BYK-333 | | | | | | | | | | | | | |
| | | BYK-377 | | | | | | | | | | | | | |
| | | BYK-UV3500 | 0.100 | | | | | | | | | | | | |
| | | BYK-UV3510 | | 0.100 | | | | | | | | | | | |
| | Polyester- modified | BYK-313 | | | 0.100 | | | | | | | | | | |
| | | BYK-315N | | | | | | | | | | | | | |
| | | BYK-370 | | | | 0.100 | | | | | | | | | |
| | | BYK-UV3570 | | | | | 0.100 | | | | | | | | |
| | Aralkyl-modified | BYK-322 | | | | | | 0.100 | | | | | | | |
| | | BYK-323 | | | | | | | 0.100 | | | | | | |
| Acrylic surfactant | | BYK-350 | | | | | | | | 0.100 | | | | | |
| | | BYK-361N | | | | | | | | | 0.100 | | | | |
| Resin | Acrylic resin | Synthetic resin 1 | | | | | | | | | | 3.000 | | | |
| | | Synthetic resin 2 | | | | | | | | | | | 3.000 | | |
| | | Synthetic resin 3 | 3.000 | 3.000 | 3.000 | 3.000 | 3.000 | 3.000 | 3.000 | 3.000 | 3.000 | | | | |
| | | Synthetic resin 4 | | | | | | | | | | | | 3.000 | |
| | | Synthetic resin 5 | | | | | | | | | | | | | 3.000 |
| | Vinyl chloride-vinyl acetate copolymer resin | Synthetic resin 1 | 1.500 | 1.500 | 1.500 | 1.500 | 1.500 | 1.500 | 1.500 | 1.500 | 1.500 | 1.500 | 1.500 | 1.500 | 1.500 |
| | | Synthetic resin 2 | | | | | | | | | | | | | |
| | | Synthetic resin 3 | | | | | | | | | | | | | |
| | | Synthetic resin 4 | | | | | | | | | | | | | |
| Dispersant | Polycaprolactone-based | Solsperse32000 | 1.500 | 1.500 | 1.500 | 1.500 | 1.500 | 1.500 | 1.500 | 1.500 | 1.500 | 1.500 | 1.500 | 1.500 | 1.500 |
| | | Solsperse33000 | | | | | | | | | | | | | |
| Pigment | Carbon black | | | | | | | | | | | | | | |
| | Cyan (C. I. Pigment Blue 15: 4) | | 3.000 | 3.000 | 3.000 | 3.000 | 3.000 | 3.000 | 3.000 | 3.000 | 3.000 | 3.000 | 3.000 | 3.000 | 3.000 |
| | Magenta (C. I. Pigment Red 122) | | | | | | | | | | | | | | |
| | Magenta (C. I. Pigment Violet 19) | | | | | | | | | | | | | | |
| | Yellow (C. I. Pigment Yellow 155) | | | | | | | | | | | | | | |
| | Yellow (C. I. Pigment Yellow 150) | | | | | | | | | | | | | | |
| | Orange (C. I. Pigment Orange 43) | | | | | | | | | | | | | | |
| | Orange (C. I. Pigment Orange 64) | | | | | | | | | | | | | | |
| | Green (C. I. Pigment Green 36) | | | | | | | | | | | | | | |
| | Green (C. I. Pigment Green 58) | | | | | | | | | | | | | | |
| | Red (C. I. Pigment Red 177) | | | | | | | | | | | | | | |
| | Red (C. I. Pigment Red 254) | | | | | | | | | | | | | | |
| | White (C. I. Pigment White 6) | | | | | | | | | | | | | | |
| | Total | | 100.000 | 100.000 | 100.000 | 100.000 | 100.000 | 100.000 | 100.000 | 100.000 | 100.000 | 100.000 | 100.000 | 100.000 | 100.000 |
| Evaluation | Bleeding property | | 3 | 3 | 4 | 4 | 5 | 2 | 2 | 2 | 2 | 5 | 5 | 5 | 5 |
| | Glossiness | | 5 | 5 | 5 | 5 | 5 | 2 | 2 | 2 | 2 | 5 | 5 | 4 | 2 |
| | Surface drying property | | 5 | 5 | 5 | 5 | 5 | 5 | 5 | 5 | 5 | 5 | 5 | 5 | 5 |
| | Coated film rubbing resistance | | 5 | 5 | 5 | 4 | 5 | 5 | 5 | 1 | 1 | 2 | 3 | 5 | 5 |
| | Member suitability | | 4 | 4 | 4 | 4 | 4 | 4 | 4 | 4 | 4 | 4 | 4 | 4 | 4 |

**[Table 6]**

| Classification | Type | Name | Example4 4 | Example4 5 | Example4 6 | Example4 7 | Example4 8 | Example4 9 | Example5 0 | Example5 1 | Examples 2 | Examples 3 | Examples 4 | Examples 5 | Examples 6 |
|---|---|---|---|---|---|---|---|---|---|---|---|---|---|---|---|
| Organic solvent A | Alkylamide (a1) | DEF | 25.000 | 25.000 | 25.000 | 25.000 | 25.000 | 25.000 | 25.000 | 25.000 | 25.000 | 25.000 | 25.000 | 25.000 | 25.000 |
| | | DEPA | | | | | | | | | | | | | |
| | | DEAA | | | | | | | | | | | | | |
| | | DMF | | | | | | | | | | | | | |
| | Cyclic amide (a2) | EC | | | | | | | | | | | | | |
| | | MEC | | | | | | | | | | | | | |
| | | NVC | | | | | | | | | | | | | |
| | | NMP | | | | | | | | | | | | | |
| Other solvents | Dialkyl ether | DBDG | | | | | | | | | | | | | |
| | | MEDG | 10.000 | 10.000 | 10.000 | 10.000 | 10.000 | 10.000 | 10.000 | 10.000 | 10.000 | 10.000 | 10.000 | 13.650 | 10.000 |
| | | DEDG | 50.900 | 50.900 | 50.900 | 50.900 | 50.900 | 50.900 | 50.900 | 50.900 | 50.900 | 50.900 | 50.900 | 50.900 | 50.900 |
| | | DMFDG | | | | | | | | | | | | | |
| | Monoalkyl ether | BTG | 5000 | 5000 | 5000 | 5000 | 5000 | 5000 | 5000 | 5000 | 5000 | 5000 | 5000 | 5000 | 5000 |
| | | MFTG | | | | | | | | | | | | | |
| | | MFDG | | | | | | | | | | | | | |
| | Lactone | GBL | | | | | | | | | | | | | |
| | | DVL | | | | | | | | | | | | | |
| | | ECL | | | | | | | | | | | | | |
| | Carbonic acid ester | PC | | | | | | | | | | | | | |
| | Acetate | DEGmEEA | | | | | | | | | | | | | |
| | Lactate ester | EL | | | | | | | | | | | | | |
| Polysiloxane-based surfactant | Polyether-modified | BYK-302 | | | | | | | | | | | | | |
| | | BYK-320 | | | | | | | | | | | | | |
| | | BYK-331 | 0.100 | 0.100 | 0.100 | 0.100 | 0.100 | 0.100 | 0.100 | 0.100 | 0.100 | 0.100 | 0.100 | 0.100 | 0.100 |
| | | BYK-333 | | | | | | | | | | | | | |
| | | BYK-377 | | | | | | | | | | | | | |
| | | BYK-UV3500 | | | | | | | | | | | | | |
| | | BYK-UV3510 | | | | | | | | | | | | | |
| | Polyester- modified | BYK-313 | | | | | | | | | | | | | |
| | | BYK-315N | | | | | | | | | | | | | |
| | | BYK-370 | | | | | | | | | | | | | |
| | | BYK-UV3570 | | | | | | | | | | | | | |
| | Aralkyl-modified | BYK-322 | | | | | | | | | | | | | |
| | | BYK-323 | | | | | | | | | | | | | |
| Acrylic surfactant | | BYK-350 | | | | | | | | | | | | | |
| | | BYK-361N | | | | | | | | | | | | | |
| Resin | Acrylic resin | Synthetic resin 1 | | | | 4.500 | | | | | | | | | |
| | | Synthetic resin 2 | | | | | | | | | | | | | |
| | | Synthetic resin 3 | 3.000 | 3.000 | 3.000 | | 4.500 | | | | | 3.000 | 3.000 | 3.000 | 3.000 |
| | | Synthetic resin 4 | | | | | | | | | | | | | |
| | | Synthetic resin 5 | | | | | | 4.500 | | | | | | | |
| | Vinyl chloride-vinyl acetate copolymer resin | Synthetic resin 1 | | | | | | | 4.500 | | | 1.500 | 1.500 | 1.500 | 1.500 |
| | | Synthetic resin 2 | 1.500 | | | | | | | | | | | | |
| | | Synthetic resin 3 | | 1.500 | | | | | | 4.500 | | | | | |
| | | Synthetic resin 4 | | | 1.500 | | | | | | 4.500 | | | | |
| Dispersant | Polycaprolactone-based | Solsperse32000 | 1.500 | 1.500 | 1.500 | 1.500 | 1.500 | 1.500 | 1.500 | 1.500 | 1.500 | 1.500 | | 0.250 | |
| | | Solsperse33000 | | | | | | | | | | | 1.500 | | 1.500 |
| Pigment | Carbon black | | | | | | | | | | | 3.000 | 3.000 | 0.500 | |
| | Cyan (C. I. Pigment Blue 15: 4) | | 3.000 | 3.000 | 3.000 | 3.000 | 3.000 | 3.000 | 3.000 | 3.000 | 3.000 | | | 0.100 | 3.000 |
| | Magenta (C. I. Pigment Red 122) | | | | | | | | | | | | | | |
| | Magenta (C. I. Pigment Violet 19) | | | | | | | | | | | | | | |
| | Yellow (C. I. Pigment Yellow 155) | | | | | | | | | | | | | | |
| | Yellow (C. I. Pigment Yellow 150) | | | | | | | | | | | | | | |
| | Orange (C. I. Pigment Orange 43) | | | | | | | | | | | | | | |
| | Orange (C. I. Pigment Orange 64) | | | | | | | | | | | | | | |
| | Green (C. I. Pigment Green 36) | | | | | | | | | | | | | | |
| | Green (C. I. Pigment Green 58) | | | | | | | | | | | | | | |
| | Red (C. I. Pigment Red 177) | | | | | | | | | | | | | | |
| | Red (C. I. Pigment Red 254) | | | | | | | | | | | | | | |
| | White (C. I. Pigment White 6) | | | | | | | | | | | | | | |
| | Total | | 100.000 | 100.000 | 100.000 | 100.000 | 100.000 | 100.000 | 100.000 | 100.000 | 100.000 | 100.000 | 100.000 | 100.000 | 100.000 |
| Evaluation | Bleeding property | | 5 | 5 | 5 | 5 | 5 | 5 | 5 | 5 | 5 | 5 | 5 | 5 | 5 |
| | Glossiness | | 5 | 4 | 2 | 5 | 5 | 2 | 5 | 4 | 2 | 5 | 5 | 5 | 5 |
| | Surface drying property | | 5 | 5 | 5 | 5 | 5 | 5 | 5 | 5 | 5 | 5 | 5 | 5 | 5 |
| | Coated film rubbing resistance | | 5 | 5 | 5 | 2 | 5 | 5 | 5 | 5 | 5 | 5 | 5 | 5 | 5 |
| | Member suitability | | 4 | 4 | 4 | 4 | 4 | 4 | 4 | 4 | 4 | 4 | 4 | 4 | 4 |

**[Table 7]**

| Classification | Type | Name | Example5 7 | Example5 8 | Examples 9 | Example6 0 | Examples 1 | Examples 2 | Examples 3 | Examples 4 | Examples 5 | Examples 6 | Examples 7 | Examples 8 | Examples 9 |
|---|---|---|---|---|---|---|---|---|---|---|---|---|---|---|---|
| Organic solvent A | Alkylamide (a1) | DEF | 25.000 | 25.000 | 25.000 | 25.000 | 25.000 | 25.000 | 25.000 | 25.000 | 25.000 | 25.000 | 25.000 | 25.000 | 25.000 |
| | | DEPA | | | | | | | | | | | | | |
| | | DEAA | | | | | | | | | | | | | |
| | | DMF | | | | | | | | | | | | | |
| | Cyclic amide (a2) | EC | | | | | | | | | | | | | |
| | | MEC | | | | | | | | | | | | | |
| | | NVC | | | | | | | | | | | | | |
| | | NMP | | | | | | | | | | | | | |
| Other solvents | Dialkyl ether | DBDG | | | | | | | | | | | | | |
| | | MEDG | 13.750 | 10.000 | 10.000 | 13.750 | 10.000 | 10.000 | 10.000 | 10.000 | 10.000 | 10.000 | 10.000 | 10.000 | 10.000 |
| | | DEDG | 50.900 | 50.900 | 50.900 | 50.900 | 50.900 | 50.900 | 50.900 | 50.900 | 50.900 | 50.900 | 50.900 | 50.900 | 50.900 |
| | | DMFDG | | | | | | | | | | | | | |
| | Monoalkyl ether | BTG | 5000 | 5000 | 5000 | 5000 | 5000 | 5000 | 5000 | 5000 | 5000 | 5000 | 5000 | 5000 | 5000 |
| | | MFTG | | | | | | | | | | | | | |
| | | MFDG | | | | | | | | | | | | | |
| | Lactone | GBL | | | | | | | | | | | | | |
| | | DVL | | | | | | | | | | | | | |
| | | ECL | | | | | | | | | | | | | |
| | Carbonic acid ester | PC | | | | | | | | | | | | | |
| | Acetate | DEGmEEA | | | | | | | | | | | | | |
| | Lactate ester | EL | | | | | | | | | | | | | |
| Polysiloxane-based surfactant | Polyether-modified | BYK-302 | | | | | | | | | | | | | |
| | | BYK-320 | | | | | | | | | | | | | |
| | | BYK-331 | 0.100 | 0.100 | 0.100 | 0.100 | 0.100 | 0.100 | 0.100 | 0.100 | 0.100 | 0.100 | 0.100 | 0.100 | 0.100 |
| | | BYK-333 | | | | | | | | | | | | | |
| | | BYK-377 | | | | | | | | | | | | | |
| | | BYK- UV3500 | | | | | | | | | | | | | |
| | | BYK-UV3510 | | | | | | | | | | | | | |
| | Polyester- modified | BYK-313 | | | | | | | | | | | | | |
| | | BYK-315N | | | | | | | | | | | | | |
| | | BYK-370 | | | | | | | | | | | | | |
| | | BYK- UV3570 | | | | | | | | | | | | | |
| | Aralkyl-modified | BYK-322 | | | | | | | | | | | | | |
| | | BYK-323 | | | | | | | | | | | | | |
| Acrylic surfactant | | BYK-350 | | | | | | | | | | | | | |
| | | BYK-361N | | | | | | | | | | | | | |
| Resin | Acrylic resin | Synthetic resin 1 | | | | | | | | | | | | | |
| | | Synthetic resin 2 | | | | | | | | | | | | | |
| | | Synthetic resin 3 | 3.000 | 3.000 | 3.000 | 3.000 | 3.000 | 3.000 | 3.000 | 3.000 | 3.000 | 3.000 | 3.000 | 3.000 | 3.000 |
| | | Synthetic resin 4 | | | | | | | | | | | | | |
| | | Synthetic resin 5 | | | | | | | | | | | | | |
| | Vinyl chloride-vinyl acetate copolymer resin | Synthetic resin 1 | 1.500 | 1.500 | 1.500 | 1.500 | 1.500 | 1.500 | 1.500 | 1.500 | 1.500 | 1.500 | 1.500 | 1.500 | 1.500 |
| | | Synthetic resin 2 | | | | | | | | | | | | | |
| | | Synthetic resin 3 | | | | | | | | | | | | | |
| | | Synthetic resin 4 | | | | | | | | | | | | | |
| Dispersant | Polycaprolactone-based | Solsperse32000 | 0.250 | 1.500 | | 0.250 | 1.500 | 1.500 | | 1.500 | | | | | |
| | | Solsperse33000 | | | 1.500 | | | | 1.500 | | 1.500 | 1.500 | 1.500 | 1.500 | 1.500 |
| Pigment | Carbon black | | | | | | | | | | | | | | |
| | Cyan (C. I. Pigment Blue 15: 4) | | 0.500 | | | | | | | | | | | | |
| | Magenta (C. I. Pigment Red 122) | | | 3.000 | 3.000 | 0.500 | | | | | | | | | |
| | Magenta (C. I. Pigment Violet 19) | | | | | | 3.000 | | | | | | | | |
| | Yellow (C. I. Pigment Yellow 155) | | | | | | | 3.000 | 3.000 | | | | | | |
| | Yellow (C. I. Pigment Yellow 150) | | | | | | | | | 3.000 | | | | | |
| | Orange (C. I. Pigment Orange 43) | | | | | | | | | | 3.000 | | | | |
| | Orange (C. I. Pigment Orange 64) | | | | | | | | | | | 3.000 | | | |
| | Green (C. I. Pigment Green 36) | | | | | | | | | | | | 3.000 | | |
| | Green (C. I. Pigment Green 58) | | | | | | | | | | | | | 3.000 | |
| | Red (C. I. Pigment Red 177) | | | | | | | | | | | | | | 3.000 |
| | Red (C. I. Pigment Red 254) | | | | | | | | | | | | | | |
| | White (C. I. Pigment White 6) | | | | | | | | | | | | | | |
| | Total | | 100.000 | 100.000 | 100.000 | 100.000 | 100.000 | 100.000 | 100.000 | 100.000 | 100.000 | 100.000 | 100.000 | 100.000 | 100.000 |
| Evaluation | Bleeding property | | 5 | 5 | 5 | 5 | 5 | 5 | 5 | 5 | 5 | 5 | 5 | 5 | 5 |
| | Glossiness | | 5 | 5 | 5 | 5 | 5 | 5 | 5 | 5 | 5 | 5 | 5 | 5 | 5 |
| | Surface drying property | | 5 | 5 | 5 | 5 | 5 | 5 | 5 | 5 | 5 | 5 | 5 | 5 | 5 |
| | Coated film rubbing resistance | | 5 | 5 | 5 | 5 | 5 | 5 | 5 | 5 | 5 | 5 | 5 | 5 | 5 |
| | Member suitability | | 4 | 4 | 4 | 4 | 4 | 4 | 4 | 4 | 4 | 4 | 4 | 4 | 4 |

**[Table 8]**

| Classification | Type | Name | Example7 0 | Example7 1 | Example7 2 | Example7 3 | Example7 4 | Example7 5 | Example7 6 | Example7 7 | Example7 8 | Example7 9 | Examples 0 | Examples 1 | Examples 2 |
|---|---|---|---|---|---|---|---|---|---|---|---|---|---|---|---|
| Organic solvent A | Alkylamide (a1) | DEF | 25.000 | 25.000 | 25.000 | 25.000 | 25.000 | 25.000 | 25.000 | 25.000 | 25.000 | 25.000 | 25.000 | 25.000 | 25.000 |
| | | DEPA | | | | | | | | | | | | | |
| | | DEAA | | | | | | | | | | | | | |
| | | DMF | | | | | | | | | | | | | |
| | Cyclic amide (a2) | EC | | | | | | | | | | | | | |
| | | MEC | | | | | | | | | | | | | |
| | | NVC | | | | | | | | | | | | | |
| | | NMP | | | | | | | | | | | | | |
| Other solvents | Dialkyl ether | DBDG | | | | | | | | 20.000 | | | | | |
| | | MEDG | 10.000 | 10.000 | 10.000 | 10.000 | | 65.900 | | | 10.000 | 50.900 | 40.900 | 25.000 | 10.000 |
| | | DEDG | 50.900 | 43.900 | 50.900 | 50.900 | 65.900 | | | 40.900 | 50.900 | 10.000 | 25.000 | 40.900 | 50.900 |
| | | DMFDG | | | | | | | 65.900 | | | | | | |
| | Monoalkyl ether | BTG | 5000 | 5000 | | | | | | | | | | | |
| | | MFTG | | | 5000 | | | | | 5000 | | | | | |
| | | MFDG | | | | 5000 | | | | | | | | | |
| | Lactone | GBL | | | | | | | | | | | | | 5000 |
| | | DVL | | | | | | | | | | | | | |
| | | ECL | | | | | | | | | | | | | |
| | Carbonic acid ester | PC | | | | | | | | | 5.000 | 5000 | | | |
| | Acetate | DEGmEEA | | | | | | | | | | | | | |
| | Lactate ester | EL | | | | | | | | | | | | | |
| Polysiloxane-based surfactant | Polyether- modified | BYK-302 | | | | | | | | | | | | | |
| | | BYK-320 | | | | | | | | | | | | | |
| | | BYK-331 | 0.100 | 0.100 | 0.100 | 0.100 | 0.100 | 0.100 | 0.100 | 0.100 | 0.100 | 0.100 | 0.100 | 0.100 | 0.100 |
| | | BYK-333 | | | | | | | | | | | | | |
| | | BYK-377 | | | | | | | | | | | | | |
| | | BYK-UV3500 | | | | | | | | | | | | | |
| | | BYK-UV3510 | | | | | | | | | | | | | |
| | Polyester-modified | BYK-313 | | | | | | | | | | | | | |
| | | BYK-315N | | | | | | | | | | | | | |
| | | BYK-370 | | | | | | | | | | | | | |
| | | BYK-UV3570 | | | | | | | | | | | | | |
| | Aralkyl-modified | BYK-322 | | | | | | | | | | | | | |
| | | BYK-323 | | | | | | | | | | | | | |
| Acrylic surfactant | | BYK-350 | | | | | | | | | | | | | |
| | | BYK-361N | | | | | | | | | | | | | |

| | | | | | | | | | | | | | | | |
|---|---|---|---|---|---|---|---|---|---|---|---|---|---|---|---|
| Resin | Acrylic resin | Synthetic resin 1 | | | | | | | | | | | | | |
| | | Synthetic resin 2 | | | | | | | | | | | | | |
| | | Synthetic resin 3 | 3.000 | 3.000 | 3.000 | 3.000 | 3.000 | 3.000 | 3.000 | 3.000 | 3.000 | 3.000 | 3.000 | 3.000 | 3.000 |
| | | Synthetic resin 4 | | | | | | | | | | | | | |
| | | Synthetic resin 5 | | | | | | | | | | | | | |
| | Vinyl chloride-vinyl acetate copolymer resin | Synthetic resin 1 | 1.500 | 1.500 | 1.500 | 1.500 | 1.500 | 1.500 | 1.500 | 1.500 | 1.500 | 1.500 | 1.500 | 1.500 | 1.500 |
| | | Synthetic resin 2 | | | | | | | | | | | | | |
| | | Synthetic resin 3 | | | | | | | | | | | | | |
| | | Synthetic resin 4 | | | | | | | | | | | | | |
| Dispersant | Polycaprolactone-based | Sols perse32000 | | | 1.500 | 1.500 | 1.500 | 1.500 | 1.500 | 1.500 | 1.500 | 1.500 | 1.500 | 1.500 | 1.500 |
| | | Sols perse33000 | 1.500 | 1.500 | | | | | | | | | | | |
| Pigment | Carbon black | | | | | | | | | | | | | | |
| | Cyan (C. I. Pigment Blue 15: 4) | | | | 3.000 | 3.000 | 3.000 | 3.000 | 3.000 | 3.000 | 3.000 | 3.000 | 3.000 | 3.000 | 3.000 |
| | Magenta (C. I. Pigment Red 122) | | | | | | | | | | | | | | |
| | Magenta (C. I. Pigment Violet 19) | | | | | | | | | | | | | | |
| | Yellow (C. I. Pigment Yellow 155) | | | | | | | | | | | | | | |
| | Yellow (C. I. Pigment Yellow 150) | | | | | | | | | | | | | | |
| | Orange (C. I. Pigment Orange 43) | | | | | | | | | | | | | | |
| | Orange (C. I. Pigment Orange 64) | | | | | | | | | | | | | | |
| | Green (C. I. Pigment Green 36) | | | | | | | | | | | | | | |
| | Green (C. I. Pigment Green 58) | | | | | | | | | | | | | | |
| | Red (C. I. Pigment Red 177) | | | | | | | | | | | | | | |
| | Red (C. I. Pigment Red 254) | | 3.000 | | | | | | | | | | | | |
| | White (C. I. Pigment White 6) | | | 10.000 | | | | | | | | | | | |
| | Total | | 100.000 | 100.000 | 100.000 | 100.000 | 100.000 | 100.000 | 100.000 | 100.000 | 100.000 | 100.000 | 100.000 | 100.000 | 100.000 |
| Evaluation | Bleeding property | | 5 | 5 | 5 | 5 | 5 | 5 | 5 | 5 | 5 | 5 | 5 | 5 | 5 |
| | Glossiness | | 5 | 5 | 5 | 4 | 5 | 4 | 5 | 5 | 5 | 5 | 5 | 5 | 5 |
| | Surface drying property | | 5 | 5 | 5 | 5 | 5 | 5 | 5 | 3 | 5 | 5 | 5 | 5 | 5 |
| | Coated film rubbing resistance | | 5 | 5 | 5 | 5 | 5 | 5 | 5 | 5 | 5 | 5 | 5 | 5 | 5 |
| | Member suitability | | 4 | 4 | 4 | 4 | 4 | 4 | 4 | 4 | 4 | 4 | 4 | 4 | 3 |

**[Table 9]**

| Classification | Type | Name | Example8 3 | Example8 4 | Example8 5 | Example8 6 | Example8 7 | Example8 8 | Example8 9 | Example9 0 |
|---|---|---|---|---|---|---|---|---|---|---|
| Organic solvent A | Alkylamide (a1) | DEF | 25.000 | 25.000 | 25.000 | 25.000 | 25.000 | 50.000 | 80.000 | 50.000 |
| | | DEPA | | | | | | | | |
| | | DEAA | | | | | | | | |
| | | DMF | | | | | | | | |
| | Cyclic amide (a2) | EC | | | | | | | | |
| | | MEC | | | | | | | | |
| | | NVC | | | | | | | | |
| | | NMP | | | | | | | | |
| Other solvents | Dialkyl ether | DBDG | | | | | | | | |
| | | MEDG | 10.000 | 10.000 | | | | | | |
| | | DEDG | 50.900 | 50.900 | 40.900 | 40.900 | | | | |
| | | DMFDG | | | | | | | | |
| | Monoalkyl ether | BTG | | | | | | | | |
| | | MFTG | | | 5000 | 5000 | | | | |
| | | MFDG | | | | | 65.900 | 40.900 | 10.900 | |
| | Lactone | GBL | | | | | | | | 40.900 |
| | | DVL | 5000 | | | | | | | |
| | | ECL | | 5000 | | | | | | |
| | Carbonic acid ester | PC | | | | | | | | |
| | Acetate | DEGmEEA | | | 20.000 | | | | | |
| | Lactate ester | EL | | | | 20.000 | | | | |
| Polysiloxane-based surfactant | Polyether-modified | BYK-302 | | | | | | | | |
| | | BYK-320 | | | | | | | | |
| | | BYK-331 | 0.100 | 0.100 | 0.100 | 0.100 | 0.100 | 0.100 | 0.100 | 0.100 |
| | | BYK-333 | | | | | | | | |
| | | BYK-377 | | | | | | | | |
| | | BYK-UV3500 | | | | | | | | |
| | | BYK-UV3510 | | | | | | | | |
| | Polyester-modified | BYK-313 | | | | | | | | |
| | | BYK-315N | | | | | | | | |
| | | BYK-370 | | | | | | | | |
| | | BYK-UV3570 | | | | | | | | |
| | Aralkyl-modified | BYK-322 | | | | | | | | |
| | | BYK-323 | | | | | | | | |
| Acrylic surfactant | | BYK-350 | | | | | | | | |
| | | BYK-361N | | | | | | | | |

| | | | | | | | | | | |
|---|---|---|---|---|---|---|---|---|---|---|
| Resin | Acrylic resin | Synthetic resin 1 | | | | | | | | |
| | | Synthetic resin 2 | | | | | | | | |
| | | Synthetic resin 3 | 3.000 | 3.000 | 3.000 | 3.000 | 3.000 | 3.000 | 3.000 | 3.000 |
| | | Synthetic resin 4 | | | | | | | | |
| | | Synthetic resin 5 | | | | | | | | |
| | Vinyl chloride-vinyl acetate copolymer resin | Synthetic resin 1 | 1.500 | 1.500 | 1.500 | 1.500 | 1.500 | 1.500 | 1.500 | 1.500 |
| | | Synthetic resin 2 | | | | | | | | |
| | | Synthetic resin 3 | | | | | | | | |
| | | Synthetic resin 4 | | | | | | | | |
| Dispersant | Polycaprolactone-based | Solsperse32000 | 1.500 | 1.500 | 1.500 | 1.500 | 1.500 | 1.500 | 1.500 | 1.500 |
| | | Solsperse33000 | | | | | | | | |
| Pigment | Carbon black | | | | | | | | | |
| | Cyan (C. I. Pigment Blue 15: 4) | | 3.000 | 3.000 | 3.000 | 3.000 | 3.000 | 3.000 | 3.000 | 3.000 |
| | Magenta (C. I. Pigment Red 122) | | | | | | | | | |
| | Magenta (C. I. Pigment Violet 19) | | | | | | | | | |
| | Yellow (C. I. Pigment Yellow 155) | | | | | | | | | |
| | Yellow (C. I. Pigment Yellow 150) | | | | | | | | | |
| | Orange (C. I. Pigment Orange 43) | | | | | | | | | |
| | Orange (C. I. Pigment Orange 64) | | | | | | | | | |
| | Green (C. I. Pigment Green 36) | | | | | | | | | |
| | Green (C. I. Pigment Green 58) | | | | | | | | | |
| | Red (C. I. Pigment Red 177) | | | | | | | | | |
| | Red (C. I. Pigment Red 254) | | | | | | | | | |
| | White (C. I. Pigment White 6) | | | | | | | | | |
| | Total | | 100.000 | 100.000 | 100.000 | 100.000 | 100.000 | 100.000 | 100.000 | 100.000 |
| Evaluation | Bleeding property | | 5 | 5 | 5 | 5 | 5 | 5 | 5 | 5 |
| | Glossiness | | 5 | 5 | 5 | 5 | 5 | 5 | 4 | 5 |
| | Surface drying property | | 5 | 5 | 5 | 5 | 4 | 5 | 5 | 3 |
| | Coated film rubbing resistance | | 5 | 5 | 5 | 5 | 5 | 5 | 5 | 5 |
| | Member suitability | | 4 | 4 | 4 | 4 | 4 | 3 | 3 | 3 |

| | | | | | | | | | | |
|---|---|---|---|---|---|---|---|---|---|---|
| "DEF" in the tables refers to "N,N-diethylformamide". "DEPA" in the tables refers to "N,N-diethylpropanamide". "DEAA" in the tables refers to "N,N-diethylacetamide". "DMF" in the tables refers to "N,N-dimethylformamide". "EC" in the tables refers to "ε-caprolactam". "MEC" in the tables refers to "N-methyl-ε-caprolactam". "NVC" in the tables refers to "N-vinylcaprolactam". "NMP" in the tables refers to "N-methyl-2-pyrrolidone". "DBDG" in the tables refers to "diethylene glycol dibutyl ether". "MEDG" in the tables refers to "diethylene glycol methyl ethyl ether". "DEDG" in the tables refers to "diethylene glycol diethyl ether". "DMFDG" in the tables refers to "dipropylene glycol dimethyl ether". "BTG" in the tables refers to "triethylene glycol mono-n-butyl ether". "MFTG" in the tables refers to "tripropylene glycol monomethyl ether". "MFDG" in the tables refers to "dipropylene glycol monomethyl ether". "GBL" in the tables refers to "γ-butyrolactone". "DVL" in the tables refers to "δ-valerolactone". "ECL" in the tables refers to "ε-caprolactone". "PC" in the tables refers to "propylene carbonate". "DEGmEEA" in the tables refers to "diethylene glycol monoethyl ether acetate". "EL" in the tables refers to "ethyl lactate". | | | | | | | | | | |

As can be seen from the above tables, when the ink compositions in Examples contain the organic solvent A and further contain the polysiloxane-based surfactant in a range of 0.01% by mass or more and 2.0% by mass or less in the total amount of the nonaqueous ink composition, a recorded matter having excellent glossiness can be obtained, and bleeding in printing on the obtained recorded matter can be effectively prevented.

In particular, in the ink compositions in Examples 2 and 29 to 39 in which a type of the surfactant was changed, the ink compositions in Examples 2 and 29 to 37 containing the polyester and/or the polyether-modified polydialkylsiloxane had improved glossiness as compared with the ink compositions in Examples 38 and 39.

In addition, in the ink compositions in Examples 47 to 52 in which a polymerization average molecular weight of the contained resin was changed, the ink compositions in Examples 47, 48, 50, and 51 in which the polymerization average molecular weight was 80000 or less had good glossiness as compared with the ink compositions in Examples 49 and 52.

In addition, the ink compositions in Examples 53 to 71 in which a type of pigments was changed and the ink compositions in Examples 72 to 86 in which a type of the other organic solvents was changed all exhibited the effects of the present invention.

On the other hand, in the ink compositions in Comparative Examples 8 and 9 containing a surfactant of an acrylic copolymer in place of the polysiloxane-based surfactant, bleeding occurred in the obtained recorded matter, the glossiness and the coated film rubbing resistance were also reduced, and the effects of the present invention were not exhibited.

In addition, in the ink composition in Comparative Example 1 not containing the polysiloxane-based surfactant, the ink composition in Comparative Example 2 containing the polysiloxane-based surfactant in a content range of less than 0.01% by mass in the total amount of the ink composition, and the ink composition in Comparative Example 5 containing the polysiloxane-based surfactant in an amount of more than 2.0% by mass in the total amount of the ink composition, the recorded matter having excellent glossiness was not obtained.

Furthermore, the ink composition in Comparative Example 6 not containing the organic solvent A was not able to obtain a recorded matter having excellent the surface drying property, and was not able to prevent bleeding in printing on the obtained recorded matter.

### 4. Evaluation 2

The ink set containing the ink composition was evaluated for the bleeding property. Specifically, ink sets of the ink compositions containing cyan pigments (PB15: 4) in Examples and Comparative Examples and the ink compositions in which the pigment type was changed to a magenta pigment (PR 122) in the ink compositions in Examples and Comparative Examples were evaluated for the bleeding property.

Using the inkjet printer, an image having 6 pt characters at a density of 100% of cyan in 200% density solid portions of cyan and magenta at a base material surface temperature of 50°C in a high-quality printing mode (1440 × 720 dpi) was printed on a recording medium (glued polyvinyl chloride film (IMAGin JT5829R: manufactured by MACtac)), and the obtained printed matter was dried in an oven at 60°C for 5 minutes, and then bleeding in the printed matter was visually observed with a loupe (x10).

### Evaluation Standard

Evaluation 5: no ink bleeding is observed with the loupe.
Evaluation 4: no ink bleeding is visually observed, and 6 pt characters are clear.
Evaluation 3: slight ink bleeding is visually observed, but design is not impaired.
Evaluation 2: bleeding of ink is visually observed, but 6 pt characters are identifiable.
Evaluation 1: significant bleeding of ink is visually observed, and 6 pt characters cannot be visually recognized.

**[Table 10]**

| | Magenta + Cyan | | | | | | |
|---|---|---|---|---|---|---|---|
| Cyan | Comparative Example 1 | Example 2 | Comparative Example 6 | Example 31 | Example 6 | Example 36 | Example 38 |
| Comparative Example 1 | 1 | 3 | 1 | 3 | 3 | 3 | 2 |
| Example 2 | 2 | 5 | 2 | 4 | 4 | 4 | 2 |
| Comparative Example 6 | 1 | 3 | 1 | 3 | 3 | 3 | 2 |
| Example 31 | 2 | 5 | 2 | 4 | 5 | 4 | 2 |
| Example 6 | 2 | 4 | 2 | 4 | 5 | 4 | 2 |
| Example 36 | 2 | 4 | 2 | 4 | 4 | 4 | 2 |
| Example 38 | 2 | 2 | 2 | 2 | 2 | 2 | 2 |

As can be seen from the above tables, when the ink set of the ink composition contains the organic solvent A and further contains the polysiloxane-based surfactant in the range of 0.01% by mass or more and 2.0% by mass or less in the total amount of the nonaqueous ink composition, bleeding in printing on the obtained recorded matter can be effectively prevented.

In addition, even in a combination of the ink composition in Comparative Example 1 not containing the polysiloxane-based surfactant and the ink compositions in Examples 2, 31, 36, and 38 containing the organic solvent A and further containing the polysiloxane-based surfactant in the range of 0.01% by mass or more and 2.0% by mass or less in the total amount of the nonaqueous ink composition, or a combination of the ink composition in Comparative Example 6 not containing the organic solvent A and the ink compositions in Examples 2, 31, 36, and 38 containing the organic solvent A and further containing the polysiloxane-based surfactant in the range of 0.01% by mass or more and 2.0% by mass or less in the total amount of the nonaqueous ink composition, bleeding in printing can be prevented. Accordingly, it is understood that when the ink set contains at least one ink composition containing a predetermined amount of polysiloxane-based surfactant together with the organic solvent A, the ink set can prevent bleeding in printing.

### 5. Preparation of Aqueous Ink Composition

Aqueous ink compositions in Examples and Comparative Examples were prepared using the colorant (pigment dispersion), the resin (resin emulsion), an organic solvent (a), other solvents, and water (ion-exchanged water) according to ratios of the respective components shown in the following table. Methods for preparing the pigment dispersion and the resin (resin emulsion) are shown below.

### (1) Preparation of Pigment Dispersant

A mixture of 63 g of methyl methacrylate, 27 g of butyl acrylate, 30 g of butyl methacrylate, 15 g of acrylic acid, 15 g of methacrylic acid, and 3.6 g of tert-butylperoxy-2-ethylhexanoate were added dropwise over 1.5 hours to 200 g of toluene kept at 100°C. After completion of the dropwise addition, the mixture was allowed to react at 100°C for 2 hours and then cooled to obtain a resin solution. The resin was purified from the resin solution with hexane to obtain a pigment dispersion resin having a polymerization average molecular weight (polystyrene equivalent) of 20000 and an acid value of 143 mgKOH/g.

In 80 g of water (ion-exchanged water), 2.5 g of the pigment dispersion resin obtained above and 0.6 g of N,N-dimethylaminoethanol were dissolved, and 15 g of C. I. Pigment 122 and 0.05 g of an antifoaming agent ("Surfynol 104PG" manufactured by Air Products Co., Ltd.) were added, and the obtained mixture was dispersed with a paint shaker using zirconia beads to obtain a pigment dispersion.

### (2) Preparation of Resin Emulsion

After sufficiently replacing the inside of the flask including a mechanical stirrer, a thermometer, a nitrogen gas introduction tube, a reflux tube and a dropping funnel with nitrogen gas, 0.75 g of a reactive surfactant (manufactured by Kao Corporation, trade name: Latemul PD- 104), 0.04 g of potassium persulfate, 1.5 g of methacrylic acid, and 150 g of pure water were charged, and stirred and mixed at 25°C. A mixture of 115.5 g of methyl methacrylate, 18 g of 2-ethylhexyl acrylate, and 15 g of butyl acrylate was added dropwise to the obtained mixture to prepare a pre-emulsion. Alternatively, after sufficiently replacing the inside of the flask including a mechanical stirrer, a thermometer, a nitrogen gas introduction tube, a reflux tube and a dropping funnel with nitrogen gas, 3 g of a reactive surfactant (manufactured by Kao Corporation, trade name: Latemul PD- 104), 0.01 g of potassium persulfate, and 200 g of pure water were stirred and mixed at 70°C. After that, the prepared pre-emulsion was dropped into a flask over 3 hours. After further heating and aging at 70°C for 3 hours, cooling, adjusting the pH to 8 with N,N-dimethylethanolamine, and filtering with #150 mesh (manufactured by Nippon Orimono Co., Ltd.), 500 g of a resin emulsion (glass transition temperature: 64°C, acid value: 7 mg KOH/g, volume-based cumulative 50% particle diameter (D50): 90 nm) having a solid content of 30 mass% by mass was obtained. The volume-based cumulative 50% particle diameter (D50) of the resin emulsion was measured at 25°C using the concentrated particle size analyzer (model: FPAR-1000, manufactured by Otsuka Electronics Co., Ltd.).

### 6. Evaluation 3

The above aqueous ink compositions were evaluated for the bleeding property, the glossiness, the surface drying property, the coated film rubbing resistance, and the member suitability in the same manner as described above.

**[Table 11]**

| | | | Example2-1 | Example2-2 | Example2-3 | Example2-4 | Example2-5 | Example2-6 | Example2-7 | Example2-8 | Example2-9 |
|---|---|---|---|---|---|---|---|---|---|---|---|
| Organic solvent A | Alkyl amide (a1) | N,N-diethylformamide | 15.000 | | | 15.000 | 1.000 | 5.000 | 30.000 | 40.000 | 15.000 |
| | Cyclic amide (a2) | *ε* -caprolactam | | 15.000 | | | | | | | |
| | | 2-pyrrolidone | | | 15.000 | | | | | | |
| Other solvents | Glycol | Propylene glycol | 15.000 | 15.000 | 15.000 | 15.000 | 15.000 | 15.000 | 15.000 | 15.000 | 15.000 |
| | | 1,3-propanediol | | | | | | | | | |
| | | Water | 39.500 | 39.500 | 39.500 | 39.500 | 53.500 | 49.500 | 24.500 | 14.500 | 39.950 |
| Polysiloxane-based surfactant | Polyether-modified | SAG503A | | | | 0.500 | | | | | |
| | | BYK-345 | 0.500 | 0.500 | 0.500 | | 0.500 | 0.500 | 0.500 | 0.500 | 0.050 |
| Acrylic surfactant | | BYK-361N | | | | | | | | | |
| | | BYK-381 | | | | | | | | | |
| Resin | Acrylic resin | Resin emulsion | 10.000 | 10.000 | 10.000 | 10.000 | 10.000 | 10.000 | 10.000 | 10.000 | 10.000 |
| Pigment dispersion | Magenta | | 20.000 | 20.000 | 20.000 | 20.000 | 20.000 | 20.000 | 20.000 | 20.000 | 20.000 |
| Total | | | 100.000 | 100.000 | 100.000 | 100.000 | 100.000 | 100.000 | 100.000 | 100.000 | 100.000 |
| Evaluation | | Bleeding property | 5 | 4 | 4 | 5 | 3 | 4 | 5 | 5 | 5 |
| | | Glossiness | 5 | 5 | 5 | 5 | 3 | 4 | 5 | 4 | 5 |
| | | Surface drying property | 5 | 4 | 4 | 5 | 3 | 3 | 5 | 5 | 5 |
| | | Coated film rubbing resistance | 5 | 5 | 5 | 5 | 3 | 3 | 5 | 5 | 5 |
| | | Member suitability | 5 | 5 | 3 | 5 | 5 | 5 | 5 | 4 | 5 |

| | | | Example2-10 | Example2-11 | Example2-12 | Comparativ e Example2-1 | Comparativ e Example2-2 | Comparativ e Example2-3 | Comparativ e Example2-4 | Comparativ e Example2-5 | Comparativ e Example2-6 |
|---|---|---|---|---|---|---|---|---|---|---|---|
| Organic solvent A | Alkyl amide (a1) | N,N-diethylformamide | 15.000 | 15.000 | 10.000 | | 15.000 | 15.000 | 15.000 | 15.000 | 15.000 |
| | Cyclic amide (a2) | *ε* -caprolactam | | | | | | | | | |
| | | 2-pyrrolidone | | | | | | | | | |
| Other solvents | Glycol | Propylene glycol | 15.000 | | 15.000 | 15.000 | 15.000 | 15.000 | 15.000 | 15.000 | 15.000 |
| | | 1,3-propanediol | | 15.000 | | 10.000 | | | | | |
| | | Water | 38.500 | 39.500 | 44.500 | 44.500 | 39.995 | 37.000 | 40.000 | 39.500 | 39.500 |
| Polysiloxane-based surfactant | Polyether-modified | SAG503A | | | | | | | | | |
| | | BYK-345 | 1.500 | 0.500 | 0.500 | 0.500 | 0.005 | 3.000 | | | |
| Acrylic surfactant | | BYK-361N | | | | | | | | 0.500 | |
| | | BYK-381 | | | | | | | | | 0.500 |
| Resin | Acrylic resin | Resin emulsion | 10.000 | 10.000 | 10.000 | 10.000 | 10.000 | 10.000 | 10.000 | 10.000 | 10.000 |
| Pigment dispersion | Magenta | | 20.000 | 20.000 | 20.000 | 20.000 | 20.000 | 20.000 | 20.000 | 20.000 | 20.000 |
| Total | | | 100.000 | 100.000 | 100.000 | 100.000 | 100.000 | 100.000 | 100.000 | 100.000 | 100.000 |
| Evaluation | | Bleeding property | 5 | 5 | 4 | 1 | 1 | 1 | 1 | 1 | 1 |
| | | Glossiness | 4 | 5 | 5 | 2 | 1 | 1 | 1 | 2 | 2 |
| | | Surface drying property | 5 | 5 | 4 | 2 | 5 | 5 | 5 | 5 | 5 |
| | | Coated film rubbing resistance | 5 | 5 | 4 | 1 | 1 | 5 | 1 | 2 | 2 |
| | | Member suitability | 5 | 5 | 5 | 5 | 5 | 5 | 5 | 5 | 5 |

As can be seen from the above tables, even in a case of the aquenous ink composition containing water, similarly, when the ink compositions in Examples contain the organic solvent A and further contain the polysiloxane-based surfactant in the range of 0.01% by mass or more and 0.2% by mass or less in the total amount of the nonaqueous ink composition, the recorded matter having excellent glossiness can be obtained, and bleeding in printing on the obtained recorded matter can be effectively prevented.

In particular, in the ink compositions in Examples 2-1 to 2-3 in which the type of the organic solvent A was changed, the ink composition in Example 1 containing the alkylamide-based solvent was able to more effectively prevent bleeding in printing on the obtained recorded matter as compared with the ink compositions in Examples 2-2 and 2-3 containing the cyclic amide-based solvent.

In addition, in the ink compositions in Examples 2-5 to 2-8 in which a content of the organic solvent A was changed, the ink compositions in Examples 2-6 and 2-7 in which the content of the organic solvent A was in a range of 3.0% by mass or more and 30.0% by mass or less were able to obtain the recorded matter having more excellent glossiness, and were able to further effectively prevent bleeding in printing on the obtained recorded matter as compared with the ink composition in Example 2-5.

On the other hand, in an ink composition in Comparative Example 2-1 not containing the organic solvent A, ink compositions in Comparative Examples 2-2 and 2-3 in which the polysiloxane-based surfactant was outside the range of 0.01% by mass or more and 2.0% by mass or less in the total amount of the nonaqueous ink composition, and ink compositions in Comparative Examples 2-4 to 2-6 not containing the polysiloxane-based surfactant, bleeding occurred in the obtained recorded matter, the glossiness was also reduced, and the effects of the present invention were not exhibited.

### 7. Evaluation 4

The ink set containing the aqueous ink composition was evaluated for the bleeding property. Specifically, ink sets of ink compositions obtained by changing the magenta dispersions in Examples and Comparative Examples to cyan dispersions adjusted by the same method were evaluated for the bleeding property.

### (Evaluation of Bleeding Property Between Colors)

Using the inkjet printer, an image having 6 pt characters at a density of 100% of cyan in 200% density solid portions of cyan and magenta at a base material surface temperature of 50°C in a high-quality printing mode (1440 × 720 dpi) was printed on a recording medium (glued polyvinyl chloride film (IMAGin JT5829R: manufactured by MACtac)), and the obtained printed matter was dried in an oven at 60°C for 5 minutes, and then bleeding in the printed matter was visually observed with a loupe (x10).

### Evaluation Standard

Evaluation 5: no ink bleeding is observed with the loupe.

Evaluation 4: no ink bleeding is visually observed, and 6 pt characters are clear. Evaluation 3: slight ink bleeding is visually observed, but design is not impaired.

Evaluation 2: bleeding of ink is visually observed, but 6 pt characters are identifiable.

Evaluation 1: significant bleeding of ink is visually observed, and 6 pt characters cannot be visually recognized.

**[Table 12]**

| | | Magenta + Cyan | | | |
|---|---|---|---|---|---|
| | | Example 2-1 | Comparative Example 2-1 | Comparative Example 2-4 | Comparative Example 2-5 |
| Cyan | Example 2-1 | 5 | 3 | 2 | 2 |
| | Comparative Example 2-1 | 3 | 1 | 1 | 1 |
| | Comparative Example 2-4 | 3 | 1 | 1 | 1 |
| | Comparative Example 2-5 | 3 | 1 | 1 | 1 |

As can be seen from the above tables, even in the ink set of the aqueous ink composition containing the organic solvent A and further containing the polysiloxane-based surfactant in the range of 0.01% by mass or more and 2.0% by mass or less in the total amount of the aqueous ink composition, bleeding in printing on the obtained recorded matter can be effectively prevented.

In addition, even in a combination of the ink composition in Comparative Example 2-1 not containing the organic solvent A and an ink composition in Example 2-1 containing the organic solvent A and further containing the polysiloxane-based surfactant in the range of 0.01% by mass or more and 2.0% by mass or less in the total amount of the aqueous ink composition, or a combination of ink compositions in Comparative Examples 2-4 and 2-5 not containing the polysiloxane-based surfactant, and an ink composition in Example 2-1 containing the organic solvent A and further containing the polysiloxane-based surfactant in the range of 0.01% by mass or more and 2.0% by mass or less in the total amount of the aqueous ink composition, bleeding in printing can be prevented. Accordingly, it is understood that even in an ink set containing at least one aqueous ink composition containing a predetermined amount of polysiloxane-based surfactant together with the organic solvent A, similarly to the ink set containing at least one aqueous ink composition, the ink set can prevent bleeding in printing.

## Claims

1. An ink composition comprising an organic solvent,
the organic solvent comprising: the following organic solvent A; and
wherein the ink composition further comprises a polysiloxane-based surfactant in a range of 0.01% by mass or more and 2.0% by mass or less relative to the total amount of the ink composition,
organic solvent A: at least one selected from the group consisting of an alkylamide-based solvent (a1) and a cyclic amide-based solvent (a2).

2. The ink composition according to claim 1, wherein the organic solvent A comprises the alkylamide-based solvent (a1).

3. The ink composition according to claim 2, wherein the alkylamide-based solvent (a1) is represented by the following formula (1): 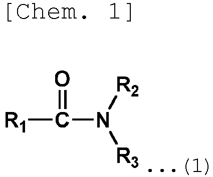 wherein R₁ represents hydrogen or an alkyl group having 1 or more and 4 or less carbon atoms, and R₂ and R₃ each independently represent hydrogen or an alkyl group having 1 or more and 4 or less carbon atoms.

4. The ink composition according to claim 3, wherein the alkylamide-based solvent (a1) comprises at least one selected from the group consisting of N,N-diethylformamide, N,N-diethylpropanamide, and N,N-diethylacetamide.

5. The ink composition according to claim 1, wherein the organic solvent A comprises the cyclic amide-based solvent (a2).

6. The ink composition according to claim 5, wherein the cyclic amide-based solvent (a2) is represented by the following formula (2) : 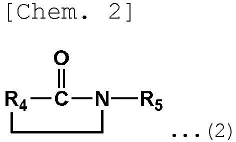 wherein R₄ represents an alkylene group having 3 or more and 5 or less carbon atoms, and R₅ represents hydrogen or an alkyl group or an unsaturated hydrocarbon group having 1 or more and 4 or less carbon atoms.

7. The ink composition according to claim 6, wherein the cyclic amide-based solvent (a2) comprises at least one selected from the group consisting of ε-caprolactam, N-methyl-ε-caprolactam, and N-vinylcaprolactam.

8. The ink composition according to any one of claims 1 to 7, wherein a content of the organic solvent A is in a range of 1% by mass or more and 90% by mass or less in the total amount of the ink composition.

9. The ink composition according to any one of claims 1 to 8, wherein the polysiloxane-based surfactant comprises polyester- and/or polyether-modified polydialkylsiloxane having a repeating unit represented by the following formula (3) and a repeating unit represented by the following formula (3) and formula (4): 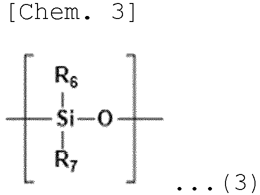
wherein R₆ represents an alkyl group having 1 to 3 carbon atoms, and R₇ represents an alkyl group having 1 to 15 carbon atoms, 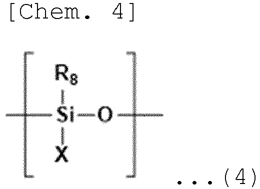
wherein R₈ represents an alkyl group having 1 to 3 carbon atoms, and X represents a polyester-modified group or a polyether-modified group.

10. The ink composition according to any one of claims 1 to 9, wherein the ink composition is ejected by an inkjet method.

11. The ink composition according to any one of claims 1 to 10, wherein the ink composition is used for a resin base material.

12. An ink set comprising the ink composition according to any one of claims 1 to 11.

13. A recording method comprising: ejecting the ink composition according to any one of claims 1 to 11 onto a surface of a base material by an inkjet method.

14. A method for producing a recorded matter comprising:
ejecting the ink composition according to any one of claims 1 to 11 onto a surface of a base material by an inkjet method.

15. A recorded matter comprising: a recording layer made of the ink composition according to any one of claims 1 to 11 formed on a surface of a base material.
